(19) **Europäisches Patentamt / European Patent Office / Office européen des brevets**

(11) **EP 2 446 413 B1**

(12) **EUROPEAN PATENT SPECIFICATION**

(45) Date of publication and mention
of the grant of the patent:
**12.08.2015 Bulletin 2015/33**

(51) Int Cl.:
**G06T 3/00** *(2006.01)*    **G06T 1/60** *(2006.01)*

(21) Application number: **10727786.5**

(22) Date of filing: **04.06.2010**

(86) International application number:
**PCT/GB2010/001089**

(87) International publication number:
**WO 2010/149946 (29.12.2010 Gazette 2010/52)**

(54) **APPARATUS AND METHOD FOR DISPLAYING A WARPED VERSION OF A SOURCE IMAGE**

VORRICHTUNG UND VERFAHREN ZUR ANZEIGE EINER VERZERTEN VERSION EINES QUELLBILDES

APPAREIL ET PROCÉDÉ POUR AFFICHER UNE VERSION DÉFORMÉE D'UNE IMAGE SOURCE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **25.06.2009 GB 0911045**
**23.10.2009 US 604700**

(43) Date of publication of application:
**02.05.2012 Bulletin 2012/18**

(73) Proprietor: **Tv One Limited**
**Margate, Kent CT9 4JG (GB)**

(72) Inventor: **MALLETT, Richard Peter Disney**
**Kent ME13 0DP (GB)**

(74) Representative: **Brookes Batchellor LLP**
**1 Boyne Park**
**Tunbridge Wells Kent TN4 8EL (GB)**

(56) References cited:
**EP-B1- 0 786 738     US-A1- 2002 048 410**

- **WOLBERG G ED - WOLBERG G: "Digital Image Warping, Spatial Transformations", 1 January 1990 (1990-01-01), DIGITAL IMAGE WARPING, IEEE COMPUTER SOCIETY PRESS, LOS ALAMITOS, CA, PAGE(S) 41 - 71, XP002661394, ISBN: 0-8186-8944-7**

**Description**

**FIELD**

The present invention relates to an apparatus and a method for displaying a warped version of a source image.

**BACKGROUND**

Videos that are processed by computers or dedicated video processing hardware can be thought of as a sequence of individual still images. Each image is formed of a number of pixels, which are typically arranged in a rectangular array or matrix. The coordinate of any given pixel in the image can be determined by identifying on which horizontal line (or row) and on which vertical line (or column) within the image it is located.

Most video scaler architectures store an incoming video signal into memory in the order in which the individual pixels making up that image arrive. Thus, the whole of the uppermost row of the first image making up the video is stored, moving from the leftmost pixel to the rightmost pixel of that row. These pixels are then stored in a memory as one unit. This is repeated for the second row and so on until all of the pixels making up the image have been stored. This is repeated for all images making up the video.

Synchronous Dynamic Random Access Memory (SDRAM) chips are particularly suited to storing video data in this way. In SDRAM, data is stored in banks, rows and columns. One way of visualising the arrangement of SDRAM chips is to imagine that each bank in the SDRAM memory is a large filing cabinet having a large number of rows and columns of drawers. Each drawer stores a certain amount of information and can be identified by specifying in which particular row and column of a particular filing cabinet it is located.

To avoid confusion between the rows and columns that are used as addresses into the SDRAM and those making up the images, the latter will generally be referred to herein as "horizontal lines" and "vertical lines" respectively.

In one implementation, each pixel contains twenty-four bits of information. This means that each pixel can represent one of $2^{24} = 16,777,216$ colour values. A 48-bit wide data bus can store 48 bits, which equates to two pixels' worth of information since each pixel is twenty-four bits long. This two-pixel piece of information is often referred to as a "data word". Double Data Rate Synchronous Dynamic Random Access Memory (DDR2 SDRAM) chips transfer two data words per clock cycle. This means that each clock cycle can store four pixels' worth of information. Thus, it takes four clock cycles to store sixteen pixels, which equates to eight data words.

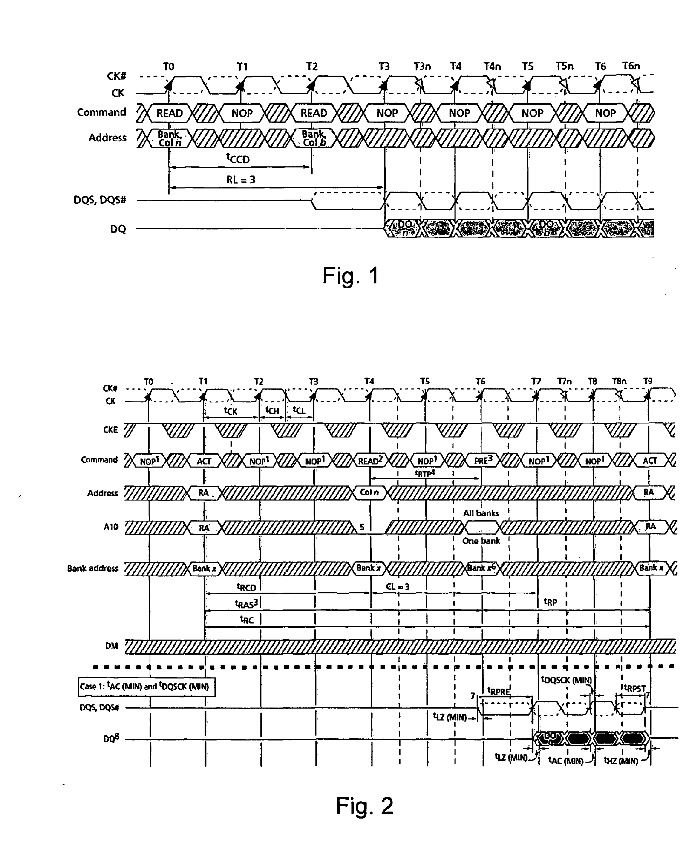

Figure 1 is a timing diagram taken from the Micron 256Mb DDR2 datasheet, which is available from Micron Technology Inc whose headquarters is at 8000 2, Federal Way, P.O. Box 6, Boise, ID 83707-006, USA or via their website at

http://download.micron.com/pdf/datasheets/dram/ddr2/256MbDDR2.pdf.

Figure 1 shows sequential column access in typical DDR2 SDRAM. Sequential column access means accessing any column in a particular row in the SDRAM memory. At time T0, a READ command is issued to read column n from a particular row in a particular bank in the SDRAM memory. At a later time, T2, a further READ command is issued to read a different column b of the same bank and row. At time T3 all of the data contained in column n is returned. As can be seen in Figure 1, there is a delay of three clock cycles, between T0 and T3, before data is returned from column n. Each of these READ commands to SDRAM results in four data words or "DQs" being retrieved from the relevant column of the SDRAM in two clock cycles. Thus, two clocks of data transfer retrieves four DQs, which equates to eight pixels of image data.

The second READ command is issued at T2 before the first four DQs are actually retrieved. This is referred to as "pipelining" and ensures that there are no gaps in the stream of data being accessed from one row, even if the READ commands are not issued continuously.

From time T3 onwards, two data words can be retrieved each clock cycle. This means that it takes one clock cycle to read two data words from different columns of the same row once that row is open.

Figure 2 is a timing diagram taken from the same Micron 256 Micron 256Mb DDR2 datasheet. Figure 2 shows sequential row access in typical DDR2 SDRAM. Figure 2 is different from Figure 1 in that, instead of sequentially accessing different columns in the same row, different rows are being accessed sequentially. Sequential row access is required, for example, by 90° rotation.

A first row to be accessed, here row A, is activated by issuing an ACT ("ACTivate") command at time T1, Then, the required column, column n, from row A is read by issuing a READ command at time T4. If it is desired to read data from a different row, whether or not is it also from the corresponding column, row A must first be "precharged" or closed. A PRE command is issued at time T6 and, after three clock cycles ($t_{RP}$), row A is closed and another ACT command can be issued at time T9.

In contrast to sequentially reading sequential columns of one row, it takes eight clock cycles to read sequentially from different rows, since each row must be opened and closed before the next row can be read. In summary, it is eight times slower to read sequential rows as it is to read sequential columns in the same row.

In some data processing arrangements, particularly image processing arrangements, frequent sequential row access is required to process the data, which leads to long data processing times and intensive use of system resources. Random row access is required for image warping, whereby an input image is mapped into non-rectangular shapes. These and other characteristics of video-based data access have presented challenges to the processing and use of video data, such as in US 2002/0048410 A1.

**SUMMARY**

The present invention is exemplified in a number of implementations and applications, some of which are summarized below.

Various embodiments of the present invention address problems including those as discussed above, as well as others including those that are particularly suited to processing video or image data. In various embodiments, the present invention addresses processing overload of data when sequential access to rows is required.

According to a first aspect of the invention according to claim 1, there is provided an apparatus for displaying a warped version of a source image, comprising line memory arranged to divide the source image into a plurality of rows of pixels from the source image, a block storage control arranged to combine the rows of pixels into pixel blocks, each pixel block comprising neighbouring horizontal and vertical pixels from the source image, wherein each pixel block is stored in sequential memory locations in a memory, an output coordinate generator arranged to generate output coordinates (OX,OY) corresponding to output pixel locations on a display, a warp engine arranged to map the output coordinates (OX,OY) to warped coordinates (WX,WY), the warped coordinates corresponding to pixel locations in the source image, a block request converter arranged to identify memory locations in which pixel blocks containing pixels having the warped coordinates (WX,WY) are stored, a block request generator arranged to request the identified pixel blocks, a memory controller arranged to retrieve the requested pixel blocks from the memory, and a display controller arranged to output the value of the pixels having the warped coordinates (WX,WY) for display at the corresponding output pixel locations (OX,OY), and a block request cache to record addresser of recently retrieved pixel blocks.

The apparatus allows a more efficient usage of processing power by dividing up the array into block. This can be particularly advantageous in situations in which mappings or transformations of the data are required. The term "block" is used herein to mean any group or sub-unit of adjacent pixels that are located in neighbouring horizontal and vertical lines in an input image, in contrast to all being located in the same horizontal or vertical line. For example, the block may conveniently be a rectangular array, or a simple L-shape, but other-shaped blocks are within the scope of the term.

The memory may comprise SDRAM, each pixel block may be stored across sequential columns in the SDRAM and the block request converter may be arranged to identify the bank, row and column addresses in which the required pixel blocks are stored. SDRAM access typically suffers from requiring sequential row access to map an input image. When the pixels making up the input image are stored in blocks, the amount of SDRAM access may be decreased.

Neighbouring pixel blocks of the source image may be grouped together into a larger pixel block that still resides in a single row and each larger pixel block may be stored in the same SDRAM row. Interleaving banks in this way allows fast access to pixels in the larger pixel blocks.

The apparatus may further comprise a vertical offset generator engine arranged to receive an output coordinate (OX,OY) generated by the output coordinate generator and to generate a plurality of offset output coordinates ((OX,OY+1),(OX,OY+2)...), each offset output coordinate being vertically offset from the non-offset output coordinate (OX,OY), and provide the output coordinates ((OX,OY),(OX,OY+1),(OX,OY+2)...) to the warp engine. Multiple lines of warped coordinates can be generated in this manner.

The apparatus may further comprise a shift register arrangement arranged to store a plurality of warped coordinates (WX,WY) entries, each warped coordinate entry having a field for its respective data value (D), and a populator arranged to compare the warped coordinates in the shift register arrangement with warped coordinates of the pixels in any retrieved pixel block and, upon a positive comparison, to complete the field for the matched warped pixel's data value (D). The shift register arrangement can be used to account for the delay in retrieving the required pixel value from the memory.

The apparatus may further comprise an ID generator arranged to receive identified memory locations from the block request converter and generate internal pixel block IDs from the identified memory locations, an ID delay line arranged to receive and delay the pixel block IDs from the ID generator, and a look-up engine arranged to receive the pixel block IDs from the delay line and retrieve pixel blocks having matching pixel block IDs from a cache. The ID generator provides a convenient engine to identify particular pixel blocks and the ID delay can be used to account for the delay in retrieving pixel information from memory.

The apparatus may further comprise an ID list arranged to store a list of pixel block IDs that are not in use, a read pointer arranged to point to the next available block ID value that can be used and a write pointer arranged to point to a recycled block ID. The ID list can be used to ensure that the correct IDs are assigned to the correct pixel blocks.

The apparatus may further comprise a block ID comparator arranged to receive identified memory locations from the block request converter, compare them with memory locations of recently identified blocks and, if a match is found, to reuse the block ID of the pixel block having the matching memory location and, if no match is found, to use a new block ID for the identified pixel block. The block ID comparator is responsible for managing the use of the block IDs which simplifies operation of the apparatus.

The apparatus may further comprise a block request cache arranged to store recent pixel block retrieval requests, whereby the memory controller is arranged not to retrieve a requested pixel block if it has just been requested or retrieved from the memory. Unnecessary memory access is minimised in this manner.

The memory controller may be arranged to store retrieved pixel blocks in a cache. Unnecessary memory access is minimised in this manner.

The memory controller may be arranged to store neighbouring pixels in the pixel blocks in different areas of the cache. This facilitates bi-linear interpolation.

The cache may comprise a content-addressable memory. This allows less memory to be used during read-back of the pixels.

The output coordinate generator may comprise a sync pulse generator arranged to generate the output coordinates at an output pixel frequency.

The apparatus may further comprise an interpolator arranged to perform bi-linear interpolation when the warp engine maps the output coordinates (OX,OY) to non-integer warped coordinates (WX,WY), and the block request converter may be arranged to identifying the warped coordinates (WX,WY) of pixels in the source image that contribute to the non-integer warped pixel coordinate (WX,WY) and identify the memory locations in which the pixel blocks containing the contributing pixels are stored, the block request generator may be arranged to request the identified pixel blocks, the memory controller may be arranged to retrieve the requested pixel blocks from the memory, the interpolator may be arranged to determine an interpolated output value of the output pixel (OX,OY) corresponding to the non-integer warped coordinate (WX,WY), and the display controller may be arranged to output the interpolated value for display at the corresponding output pixel location (OX,OY). This facilitates bi-linear interpolation which provides a more accurate output.

According to a second aspect of the invention, there is provided a method for displaying a warped version of a source image according to claim 15, the method comprising dividing the source image into a plurality of rows of pixels from the source image, combining the rows of pixels into pixel blocks, each pixel block comprising neighbouring horizontal and vertical pixels from the source image, and storing each pixel block in sequential memory locations in a memory, generating output coordinates (OX,OY) corresponding to output pixel locations on a display, mapping the output coordinates (OX,OY) to warped coordinates (WX,WY), the warped coordinates corresponding to pixel locations in the source image, identifying memory locations in which pixel blocks containing pixels having the warped coordinates (WX,WY) are stored, requesting the identified pixel blocks, retrieving the requested pixel blocks from the memory, outputting the value of the pixels having the warped coordinates (WX,WY) for display at the corresponding output pixel locations (OX,OY), and recording the memory locations of recently requested blocks in memory cache.

According to other aspects of the invention, there are provided a computer program according to claim 16 comprising instructions which, when executed, cause a data processing apparatus to perform such a method, a computer-readable medium comprising the computer program or a signal carrying the computer program.

In connection with an example embodiment, an apparatus for processing data includes a receiver circuit, a memory controller circuit, and a populator circuit. The receiver circuit receives data in the form of an array of data elements, the data elements being arranged in horizontal and vertical lines. The memory controller circuit stores (e.g., by controlling a memory), in a memory location, a sub-unit of the array that includes a subset of data elements from each line of neighboring horizontal and vertical lines of the array. The populator circuit retrieves the sub-unit from the memory location for processing. These respective circuits may be implemented, for example, as a computer programmed to carry out the indicated functions, to which application the following examples may be implemented as well.

In connection with another example embodiment, an apparatus for processing video data includes a receiver circuit, a plurality of line buffer circuits, a memory controller circuit, and a populator circuit. The receiver circuit receives video data in the form of an array of pixels arranged in horizontal and vertical lines, the array of pixels representing an image. The line buffer circuits respectively hold a different line of pixels of the received array. The memory controller circuit stores, in a single memory location, a sub-block of the array that includes a subset of pixels from at least two of the line buffers, each subset of pixels including less than all of the pixels from each line, each block of pixels representing a sub-portion of the image. The populator circuit retrieves the sub-block from the memory location for processing.

Another example embodiment is directed to a method for implementation by a programmable computer that executes instructions to cause the programmable computer to perform the following steps: receiving data in the form of an array of data elements, the data elements being arranged in horizontal and vertical lines; storing, in a memory location, a sub-unit of the array that includes a subset of data elements from each line of neighboring horizontal and vertical lines of the array; and retrieving the sub-unit from the memory location for processing.

According to another example aspect of the invention, an apparatus for processing data comprises a receiver arranged to receive data in the form of an array of data elements, the data elements being arranged in horizontal and vertical lines; a memory controller arranged to store in a memory location a sub-unit of the array comprising data elements from neighboring horizontal and vertical lines of the array; and a populator arranged to retrieve the sub-unit from the memory location for processing.

The apparatus allows a efficient usage of processing power by dividing up the array into sub-units comprising data elements from neighboring horizontal and vertical lines of the array, rather than all being from just one horizontal line. This can be particularly applicable to situations in which mappings or transformations of the data are required.

The apparatus may comprise a downscaler arranged to reduce the number of data elements in the array received by the receiver. The downscaler can be used to reduce the overhead on the overall processing requirements for the data, for example if some of the data elements need not actually be processed.

The apparatus may comprise a plurality of line buffers each arranged to hold a different horizontal line of data elements of the array.

The apparatus may comprise a storage controller arranged to cause the memory controller to store data elements from the different horizontal lines of data elements from two or more of the line buffers as the sub-unit in the same memory location as each other.

The apparatus may comprise an output coordinate generator arranged to generate output coordinates. The output coordinate generator may be a Sync Pulse Generator.

The apparatus may comprise a mapper arranged to convert the output coordinates into original data coordinates of required data elements, the required data elements being the data elements stored in memory that contribute information to the corresponding output coordinates. The mapper may be arranged to use a look-up table for the conversion. A look-up table can be particularly useful when it is difficult or impossible to define a mathematical transformation for the conversion. Alternatively, the mapper may be arranged to use a mathematical transformation for the conversion.

The apparatus may comprise a converter arranged to receive original data coordinates of required data elements and determine the memory locations of the sub-units of data elements stored in the memory that contain the required data elements

The apparatus may comprise a cache arranged to cache memory locations of recently requested sub-units.

The apparatus may comprise a shift register arranged to store the original data coordinates of required data elements with a corresponding data value.

The apparatus may comprise a populator arranged to fill in the data values using data elements sub-units retrieved from the memory by matching the original data coordinates held in the shift register with the original data coordinates in the retrieved sub-unit.

The apparatus may comprise a plurality of shift registers and an interpolator, whereby, when the original data coordinate is a non-integer value coordinate, the populator is arranged to retrieve data values of neighboring data elements having integer value original data coordinates and the interpolator is arranged to provide an output comprising weighted contributions from each of the retrieved data values of the integer original data coordinates. This provides for complex mappings or warpings of data, for example where non-integer value coordinates are likely.

Instead of the output coordinate generator comprising a Sync Pulse Generator, it may comprise a memory-side output data coordinate generator arranged to generate a set of output data coordinates at a memory frequency and a display-side output coordinate generator arranged to generate output display coordinates at a display frequency.

The apparatus may comprise an offset arrangement arranged to receive the output data coordinates from the memory-side output data coordinate generator and produce an additional set of output data coordinates corresponding to another line of output data coordinates

The apparatus may comprise a mapper arranged to receive the set and additional set of output data coordinates and translate them into original data coordinates.

The apparatus may comprise a converter arranged to receive the original data coordinates and convert them into an address into the memory, the address indicating the memory location at which the sub-unit or units containing the data elements at the original data coordinates are located. The address may comprise the bank, row and column in memory in which the sub-unit is located and an offset value which indicates the particular data element in that sub-unit which is required.

The apparatus may comprise an ID generator arranged to generate an internal ID value using the address. The internal ID value may comprise the lower bits of each of the bank, row and column addresses. This can result is a small-sized ID value which is uniquely valid for a significant number of data elements.

The apparatus may comprise a cache arranged to store recently requested sub-units.

The apparatus may comprise a delayer arranged to hold the original coordinates.

The apparatus may comprise a look-up engine arranged to look into the cache using the ID value and retrieve the relevant sub-unit of data elements having the same ID value and fill in data entries for corresponding original data coordinates in line buffers.

The apparatus may comprise a plurality of line buffers, wherein the output coordinates generated by the memory-side output coordinate generator are written to some of the line buffers and corresponding data values can be read from others of the line buffers.

The apparatus may comprise a video scaler.

The apparatus may comprise a memory, the memory containing the memory location. The memory location may comprise a location in SDRAM. SDRAM can be slightly cheaper than other forms of memory, such as SRAM, decreasing the overall costs of the apparatus. The SDRAM may comprise DDR2 SDRAM.

The data to be processed may comprise video data, the array of data elements may comprise an image and the data element may comprise pixels of the image. The apparatus is particularly suited to processing video data.

According to another aspect of the invention, there is provided a method for processing data, comprising receiving data in the form of an array of data elements, the data elements being arranged in horizontal and vertical lines; storing in a memory location a sub-unit of the array comprising data elements from neighboring horizontal and vertical lines of the array; and retrieving the sub-unit from the memory location for processing.

In particular, if the memory is an SDRAM memory, the method may comprise storing the sub-array in a memory location in one bank of the SDRAM memory and storing a neighboring sub-unit of the array in a different bank in the SDRAM memory. This can be used to interleave banks in SDRAM, which can reduce processing requirements for the data.

According to another aspect of the invention, there is provided a computer program comprising instructions, which, when executed, cause an apparatus for processing data to execute the method for processing data. A computer-readable medium may comprise the computer program. A signal may comprise the computer program.

The above summary is not intended to describe each illustrated embodiment or every implementation of the present invention

## BRIEF DESCRIPTION OF THE DRAWINGS

The invention may be more completely understood in consideration of the detailed description of various embodiments of the invention in connection with the accompanying drawings, in which:

Figure 1 is a timing diagram of sequential column access in DDR2 SDRAM, to which aspects of various example embodiments may be applied in accessing a sub-array including data elements in adjacent columns;

Figure 2 is a timing diagram of sequential row access in DDR2 SDRAM, to which aspects of various example embodiments may be applied in accessing a sub-array including data elements in adjacent rows;

Figure 3 is a schematic view of a first data processing arrangement, in accordance with one or more example embodiments of the present invention;

Figure 4 is visual representation of interleaving banks of SDRAM, in accordance with one or more example embodiments of the present invention;

Figure 5 is a representation of an input image, in accordance with one or more example embodiments of the present invention;

Figure 6 is a representation of a line-based stored input image, in accordance with one or more example embodiments of the present invention;

Figure 7 is a representation of a block-based stored input image, in accordance with one or more example embodiments of the present invention;

Figure 8 is a representation of a 90°-clockwise-rotated output image corresponding to the input image shown in Figure 5, in accordance with one or more example embodiments of the present invention;

Figure 9 is a schematic view of a second data processing arrangement, in accordance with one or more example embodiments of the present invention;

Figure 10 is a schematic view of a third data processing arrangement, in accordance with one or more example embodiments of the present invention;

Figure 11 is a schematic view of a fourth data processing arrangement, in accordance with one or more example embodiments of the present invention;

Figure 12 is a schematic view of a sub-arrangement of the fourth data processing arrangement shown in Figure 11, in accordance with one or more example embodiments of the present invention;

Figure 13 is visual representation of output stripes, in accordance with one or more example embodiments of the present invention;

Figure 14 is visual representation of input stripes, in accordance with one or more example embodiments of the present invention; and

Figure 15 is a schematic view of a sub-arrangement of the fourth data processing arrangement shown in Figure 11 for anti-aliasing or smoothing, according to another example embodiment of the present invention.

Figure 16 shows an arrangement for storing data in the SDRAM, in accordance with another example embodiment;

Figure 17 shows an arrangement in accordance with another example embodiment, in which a content addressable memory (CAM) enhancement is used;

Figure 18 is a schematic view of a fifth data processing arrangement, in accordance with one or more example embodiments of the present invention;

Figure 19 is a visual representation of block IDs, in accordance with another example embodiment;

Figure 20 is a visual representation of an ID list, in accordance with another example embodiment;

Figure 21 is a visual representation of bi-linear interpolation, in accordance with another example embodiment;

Figure 22 is a visual representation of storing neighbouring pixels in different cache areas, in accordance with another example embodiment; and

Figure 23 is a schematic view of a sixth data processing arrangement, in accordance with one or more example embodiments of the present invention.

## DETAILED DESCRIPTION

The present invention is believed to be applicable to a variety of different types of data processing devices, arrangements and approaches, and has been found to be particularly useful for applications involving the processing of data, such as video data. While the present invention is not necessarily limited to such approaches, various aspects of the invention may be appreciated through a discussion of various examples using these and other contexts.

In connection with various example embodiments, the term "sub-unit" is used herein to mean any group of adjacent data elements (such as pixels) that are located in neighbouring horizontal and vertical lines (e.g., as may be relative to all being located in the same horizontal or vertical line). For example, the sub-unit may conveniently be a rectangular array, or a simple L-shape, but other-shaped sub-units are within the scope of the term. The sub-unit may comprise a block of data elements. A block provides a convenient shape for the sub-unit, which allows near random access to data elements in all directions. In connection with various example embodiments, accessing such sub-units may thus involve accessing, at once, data elements in adjacent horizontal and vertical lines, which elements would (absent the sub-unit grouping) not be accessible together via horizontal line access or vertical line access.

In various embodiments, the sub-unit includes a four-by-four array of data elements from neighbouring vertical and horizontal lines of the array. This enables sixteen data elements to be processed in a particularly efficient manner.

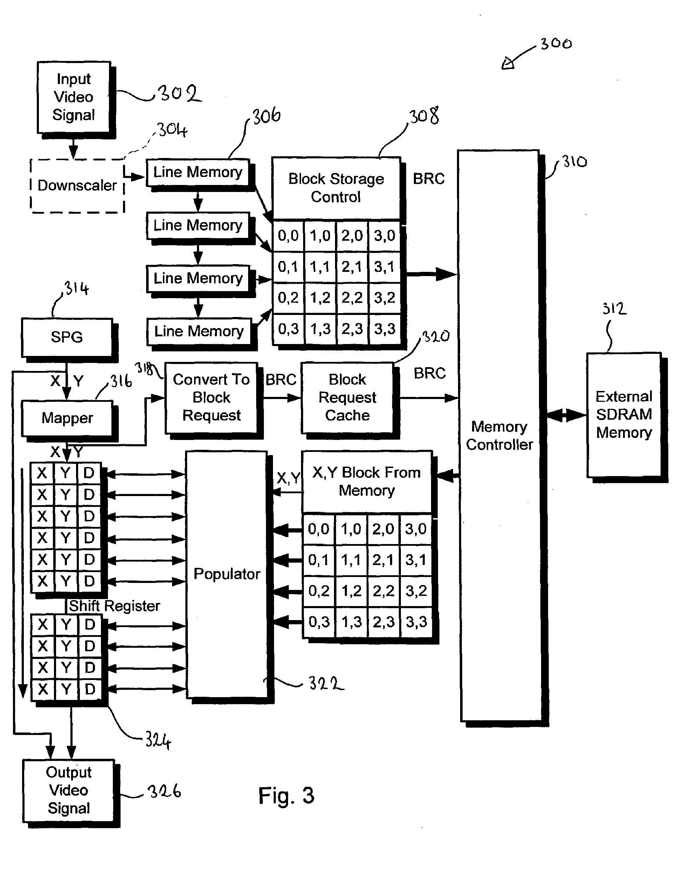

Turning now to the Figures, Figure 3 shows a data processing arrangement 300 for storing and accessing data, which in this example is video or image data. The arrangement 300 has an input video signal receiver 302, which receives an input video signal from a communications network such as the Internet or directly from the source that recorded the video.

The input video signal is then optionally subjected to downscaling by means of a downscaler 304. The downscaler 304 reduces the number of pixels to be processed by the arrangement 300. Downscaling is useful to restrict the amount of processing required by later stages of the arrangement 300 by reducing the total number of pixels that are being processed. This may be helpful if an input video is of a significantly higher resolution (number of pixels) than would be supported by the device on which it is to be displayed. In this case, there is no need to process all the pixels of the input video signal.

In the arrangement 300, several lines of pixels of the input video signal are held in line buffers 306 until a predetermined number of lines is accumulated. In this example, there are four line buffers 306, each of which stores a full line of pixels from the input video signal. When the four line buffers 306 are fully filled, sixteen pixels are read from the line buffers 306 and are passed to a block storage control 308 which stores the pixels from those four lines as a 4x4 block of sixteen pixels in sequential columns of SDRAM memory. This is in contrast to the conventional method of storing the image where there is no such block storage control 308. The block of pixels is then sent to an SDRAM controller 310 for storage in a particular bank, and at a particular row and multiple column addresses in that bank in an SDRAM memory 312.

In order to access the stored blocks of image data for display, the arrangement 300 comprises a Sync Pulse Generator ("SPG") 314. The SPG generates standard video timing signals in the form of horizontal and vertical pulses. It is used to generate the output X and Y coordinates or locations (OX,OY) of pixels an output image that is to be displayed on a screen. In other words, the SPG generates pulses corresponding to the upper-leftmost pixel on the display screen (OX,OY)=(0,0), then to the pixel immediately to its right (OX,OY)=(1,0) and scans in the same manner to the lower-rightmost pixel on the screen. The coordinates (OX,OY) used to identify pixel locations on the display screen are referred to herein as "output" coordinates or locations. This is in contrast to the "original" or "warped" coordinates or locations (WX,WY) in the input or source image, which will now be described. It is to be noted that the term "warped" is used to refer to the original image rather than the output image, even though the output image could be said to be "warped". This is because the output coordinates (OX,OY) are transformed or mapped back to the coordinates (WX,WY) in the same image that contribute to that output pixel (OX,OY).

The output coordinates - the display coordinates (OX,OY) - are fed into a mapper or warp mapping engine 316.

The mapper 316 is responsible for determining which pixels in the output video signal correspond to which pixels in the input video i.e. which pixels from the input image need to be retrieved to display the output image on a display. In order to do this, the mapper 316 may use mathematical transformations to map the output coordinates (OX,OY) into the warped coordinates (WX,WY). Alternatively, the mapper 316 may use a look-up table to generate the warped coordinates (WX,WY). In the latter approach, the table may indicate a correspondence or mapping between the output (OX,OY) and original (WX,WY) pixels, for example where a mathematical transformation is difficult or impossible to define. This may be the case where the mapping comprises "jumbling up" the original image.

In a conventional video scaler, complicated mapping is not efficient since all access to stored pixels is limited by the fact that they are stored in terms of horizontal lines of pixels from the input image. The only "mapping" readily available is a horizontal or vertical "flip". A horizontal flip (or rotation about the vertical axis) is within the remit of conventional scalers because all of the pixels in the first horizontal line of the output image are in the first horizontal line of the original image; just in the reverse order. Similarly a vertical flip is within the remit of a conventional scaler because all of the pixels in the first horizontal line of the output image are in corresponding positions in the bottom horizontal line of pixels in the input image. Of course, conventional scalers are suited to "normal" input to output mapping where there is limited mathematical transformation or use of look-up table, and the scaler merely outputs the same coordinates (OX,OY) as those that are input to it (WX,WY) or applies a simple scaling factor to the output coordinates (OX,OY) to determine the original or warped coordinates (WX,WY).

As explained above, the original or warped coordinate (WX,WY) determined by the mapper 316 specifies the relevant pixel coordinate in the input video signal, which is used to retrieve the relevant pixel from the SDRAM memory 312. The original coordinates (WX,WY) are passed to a block request converter 318, which converts the warped coordinate (WX,WY) into a corresponding bank, row and column address in the SDRAM memory in which the block containing that pixel is stored. In other words, the block request converter 312 translates an original pixel coordinate (WX,WY) into an address in the SDRAM 312 where multiple pixels, including the desired pixel, are stored in a single block.

Since sequential access of pixels often results in pixels from neighbouring horizontal and vertical lines in the original image being needed from the SDRAM memory 312, a block request cache 320 is employed to remember recently requested blocks. The cache 320 does not store the contents of the blocks themselves; just the fact that they have been accessed. If a requested block has just been retrieved, the block request cache 320 eliminates the need to issue another command for the memory controller 310 to retrieve that particular block from the SDRAM memory 312 since it will either already be open or will be in the process of being fetched by the SDRAM controller 310.

When a particular block is retrieved from the SDRAM memory 312, the pixel information from that block is used to populate the empty pixels in the output image. In order to do this, a populator or match and fill engine 322 communicates with a shift register 324 to populate the pixels of the output image. The shift register 324 is employed to store the original or warped coordinates (WX,WY) that were output from the mapper 316 that are to be retrieved from the SDRAM memory 312. The shift register 324 is of an arbitrary length to allow for the delay between the initial calculation of the relevant original coordinates (WX,WY) by the mapper 316 of the required original pixel from the input video and actually receiving that pixel from the SDRAM memory 312. This delay will be at some semi-random point after the relevant original pixel is requested. A longer shift register may be used where there is a longer delay between a particular pixel or block being requested and that block actually being retrieved from the SDRAM memory 312.

The shift register 324 shifts along as new warped coordinates (WX,WY) are generated by the mapper 316. The shift register 324 includes a field for the pixel value or data value (D) for that pixel which is initially empty since the value of that pixel is not known. As block requests are fulfilled and blocks of pixels are retrieved from the SDRAM memory 312, the block is compared with every shift register entry to see if any of the pixel information in the block can be used to fill in any of the empty entries in the shift register 324. This would be the case if the warped coordinate (WX,WY) of a pixel in a retrieved block matches another warped coordinate (WX,WY) which is already present in the shift register 324. Since several pixels are retrieved in each block (sixteen in our example), multiple shift register locations may be filled from a single block that is retrieved, if they have already been generated.

When a match is found, in other words when the warped coordinate (WX,WY) in the shift register 324 corresponds to the same pixel (WX,WY) in a block retrieved from the SDRAM memory 312, the corresponding pixel data D is stored in the corresponding shift register 324 data location (WX,WY).

By the time the shift register 324 has shifted from the start to the end, each of its warped coordinates (WX,WY) should have a data value D stored by means of the populator 322. This data value D is the required pixel value to output for a given output pixel coordinate (OX,OY), delayed by the length of the shift register 324. By advancing the SPG-generated output coordinates (OX,OY), this delay can be allowed for.

Once the shift register 324 has been fully populated, the corresponding image is output 326, for example to a display device such as a TV, PC monitor or a projector.

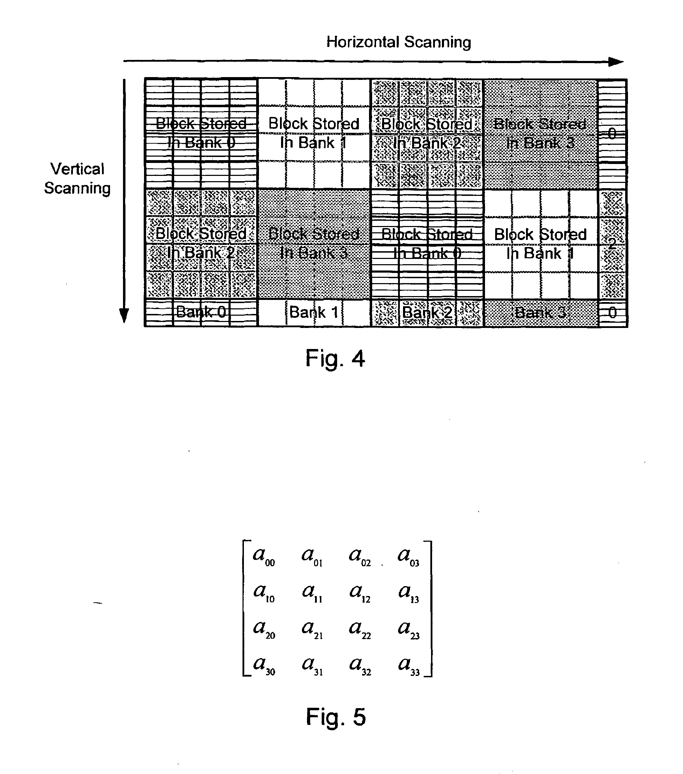

The entire process can be sped up by interleaving banks in the SDRAM 312. This is because different banks in the SDRAM can be used for storing neighbouring blocks of pixels from the original image. As shown in Figure 4, each block of pixels in an input image is, thus, surrounded by blocks that are stored in banks 0, 1, 2 and 3 of the SDRAM.

Since one bank can be read while another is being opened or closed, this reduces the amount of time required in the overall processing of the data.

Figure 5 shows a four-by-four array of sixteen pixels or data elements $\{a_{00}, a_{01} ,..., a_{33}\}$, which collectively represent an original image from an input video signal. Each data element $a_{00}, a_{01}, ..., a_{33}$ corresponds to one pixel of the sixteen-pixel original image and has an associated value $D_{00}, D_{01},..., D_{33}$. The data element or pizel $a_{ij}$ is in the i'" row and $j^{th}$ column (j=0,1,...) of the original image. In practice, most images contain more than sixteen pixels, but a small number of pixels is used here to aid in initial understanding of the invention.

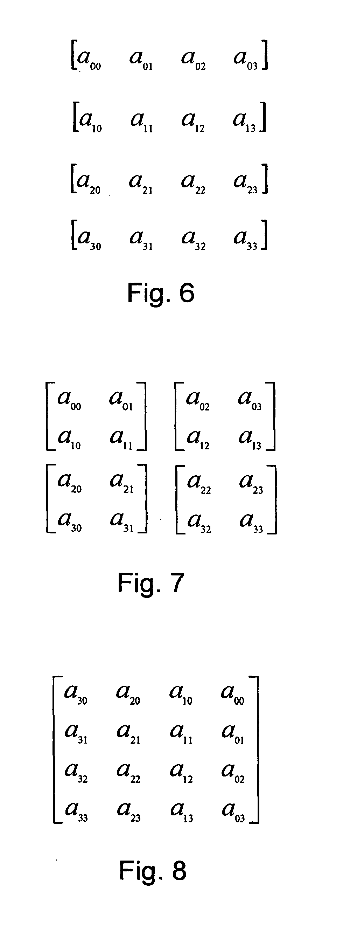

Figure 6 shows the conventional way of dividing up the original image into four horizontal lines $\{a_{00}, a_{01}, a_{02}, a_{03}\}, \{a_{10}, a_{11}, a_{12}, a_{13}\}, \{a_{20}, a_{21}, a_{22}, a_{23}\}, \{a_{30}, a_{31}, a_{32}, a_{33}\}$ of pixels, each horizontal line containing four pixels. These lines would conventionally be sequentially stored, for example in SDRAM 312 (Fig. 3).

In order to retrieve a particular pixel from memory, the horizontal line containing that pixel would conventionally be requested and retrieved from the SDRAM memory. This operation conventionally retrieves all four pixels in that horizontal line. Thus, for example, a command to retrieve pixel $a_{21}$ would conventionally retrieve the third horizontal line containing pixels $a_{20}, a_{21}, a_{22}$ and $a_{23}$.

In contrast, Figure 7 shows the improved way of storing the array by dividing it into four two-by-two sub-units or blocks $\{a_{00}, a_{01}, a_{10}, a_{11}\}, \{a_{02}, a_{03}, a_{12}, a_{13}\}, \{a_{20}, a_{21}, a_{30}, a_{31}\}, \{a_{22}, a_{23}, a_{32}, a_{33}\}$. Each sub-unit contains four pixels, which is the same number as with the Figure 6 method, but the particular division of the pixels that are stored is different.

Figure 8 shows an output image which is a warped or mapped version of the original image of Figure 5 rotated by 90° (or by $\pi/2$ radians) in the clockwise direction. Using the same nomenclature as above, the array of Figure 5 will be referred to as the "original" or "warped" array and the rotated array in Figure 8 will be referred to as the "output array". This is because the SPG generates the output pixel locations (OX,OY) for display, which are then warped back into the corresponding pixel locations (WX,WY) in the original source image. The upper-leftmost pixel or "origin pixel", $a_{30}$, in the output array (OX,OY)=(0,0) was the lower-leftmost pixel in the original array which had coordinates (WX,WY)=(3,0) in the original image; the pixel immediately to the right of the origin pixel in the output array, $a_{20}$, which has output coordinates (OX,OY)=(1,0) was immediately above the lower-leftmost pixel in the original array and had original or warped coordinates (WX,WY)=(2,0), and so on.

The output coordinates (OX,OY) of the pixels for display are output from the SPG 314 (Fig. 3) starting with the origin pixel (OX,OY)=(0,0), working horizontally along the uppermost horizontal line (OX,OY)=(1,0),(2,0),(3,0), and then moving to the leftmost pixel in the second horizontal line (OX,OY)=(0,1), until the output coordinate of the final pixel, which is the lower-rightmost pixel (OX,OY)=(3,3), is rendered or generated.

The origin pixel coordinate in the output image (OX,OY)=(0,0) is passed to the mapper 316 (Fig. 3) which maps this output coordinate to the original or warped coordinate (WX,WY)=(3,0). Accordingly, $a_{30}$, is the first pixel that needs to be read from memory. The memory controller 310 (Fig. 3) requests the particular block of pixels containing pixel $a_{30}$ from the SDRAM memory 312 (Fig. 3). This is the block that contains pixels $a_{20}, a_{21}, a_{30}$ and $a_{31}$. The entire block is retrieved from the SDRAM memory 312 (Fig. 3) and pixel $a_{30}$ can be accessed.

The next pixel required for the output image has output coordinates (OX,OY)=(1,0). This output coordinate is fed to the mapper 316 (Fig. 3), which translates it to a warped coordinate of (WX,WY)=(2,0). This means that pixel $a_{20}$ is required. This pixel is also located in the same block as pixel $a_{30}$, which has just been retrieved from the SDRAM memory 312 (Fig. 3). Thus, this pixel is immediately available and it is not necessary to retrieve another block from the SDRAM memory 312 (Fig. 3) to obtain pixel $a_{20}$.

The following two pixels required for the output image, $a_{10}$ and $a_{00}$, are not located in the previously retrieved block, so another block must be retrieved. However, they are both located in the block containing pixels $a_{00}, a_{01}, a_{10}$ and $a_{11}$. Thus, once this second block has been retrieved, pixels $a_{10}$ and $a_{00}$ can be rendered substantially simultaneously.

The second horizontal line of pixels in the output image which has output coordinates (OX,OY)=(0,1),(1,1),(2,1),(3,1), and are denoted $a_{31}, a_{21}, a_{11}$ and $a_{01}$, is also located in the two blocks that have just been retrieved and a similar process continues to render those pixels by accessing only two blocks of pixels.

This is to be contrasted to the conventional procedure for performing a 90°-clockwise rotation when the pixels are stored in the conventional manner in terms of horizontal lines rather than blocks. The first four pixels required to render the output image having output pixel locations (OX,OY)=(0,0),(1,0),(2,0),(3,0), i.e. pixels $a_{30}, a_{20}, a_{10}$ and $a_{00}$, would all be in different locations in the SDRAM memory 312 (Fig. 3), since they are all in different horizontal lines of the original image (see Figure 6). Thus, all four horizontal lines of pixels making up the original image need to be retrieved sequentially from the SDRAM memory 312 (Fig. 3) before the first horizontal line of the output image can be rendered.

Then, in order to render the second horizontal line in the output image, pixels $a_{31}, a_{21}, a_{11}$ and $a_{01}$ need to be retrieved from the SDRAM memory 312 (Fig. 3). Again, with reference to Figure 6, these are located in different locations in the SDRAM memory 312 (Fig. 3).

It can be seen from this example that the block-based processing method enables 90°-clockwise rotation to be performed twice as fast as in the conventional line-based method. This two-fold increase means that only half the conventional memory access speed is required.

In the case of a sixteen-by-sixteen image (not shown) comprising 256 pixels, which is subject to a 90°-clockwise rotation, the conventional line-based method would require (the first pixel of) all sixteen horizontal lines of sixteen pixels to be read from the SDRAM memory 312 (Fig. 3) before the first horizontal line of the output image could be rendered. Overall, 256 memory locations would need to be accessed before the output image would be fully populated.

However, if the original image is stored as sixteen four-by-four blocks each containing sixteen pixels, only four blocks of pixels (those containing the pixels of the first vertical line of the original image) would need to be retrieved to populate the first horizontal line of the output image. These same four blocks would need to be retrieved again to populate the second horizontal line of the output image. Overall, only 64 blocks would need to be retrieved before the output image would be fully populated.

In this example, it means that the block-based approach is four times faster than the conventional line-based storage approach. Indeed, conventionally it would take ten clock cycles to retrieve a line of sixteen pixels only to use one pixel from that line, because, with reference to Figure 2, it takes eight clock cycles to retrieve four DQs (between T1 and T9) and a further two clock cycles would be needed (between T9 and T11) to retrieve an additional four DQs so that eight DQs which equates to sixteen pixels have been retrieved.

In the block-based approach, it takes ten clock cycles to retrieve an entire block of sixteen pixels of which four will be used substantially simultaneously.

Although the advantage of storing the pixels in terms of blocks is that sequential reading of the pixels within the block takes as long horizontally or diagonally as it does vertically, it can be seen that there is a certain degree of inefficiency in this method. This is because for most video processing, only pixels from the same row are sequentially accessed, which means that twelve out of the sixteen pixels would probably not be used. However, where some form of mapping is required, the block-based method is considerably more efficient.

The above-described arrangement 300 is suitable for retrieving individual pixels at warped locations (WX,WY) that have integer coordinate values. However, quite often, for example in rotation at unusual angles, the mapper 316 (Fig. 3) will give non-integer values of warped coordinate locations (WX,WY) for pixels in the original input image.

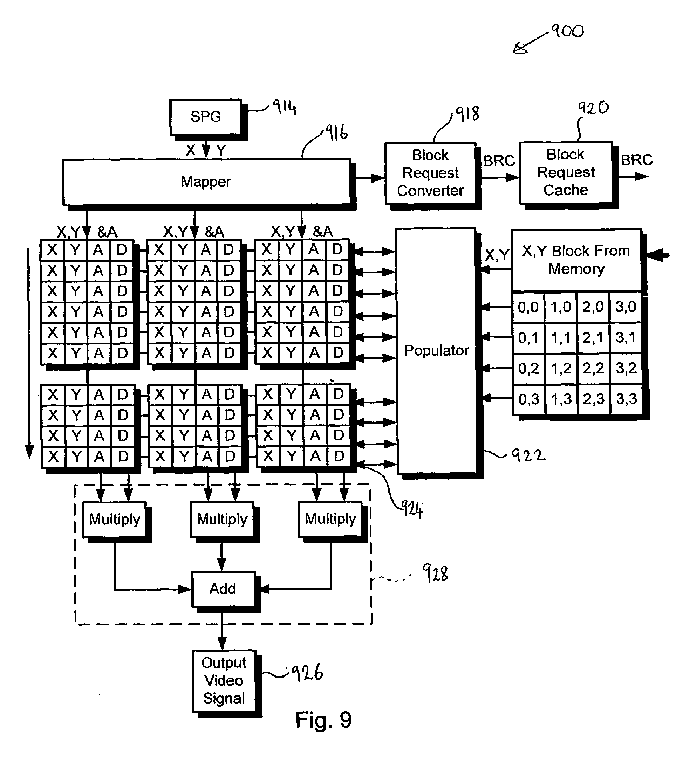

Figure 9 shows an improved arrangement 900 which can be used in such cases. Figure 9 is similar to Figure 5, but only the access-side of the arrangement 900 is shown for conciseness. Like components are given corresponding reference signs to those in Figure 3 except with a prefix of "9" rather than "3".

As can be seen in Figure 9, the SPG 914 generates output coordinates (OX,OY) for display and for the mapper 916, which converts the output coordinates (OX,OY) into original or warped coordinates (WX,WY) of the required pixels from the input video. A block request converter 918 then converts the warped coordinates (WX,WY) to a corresponding bank, row and column address into the SDRAM memory (not shown in Figure 9). The relevant block containing the pixel at that warped location (WX,WY) is retrieved from memory and is used by a populator 922 as in Figure 3, subject to checking the block request cache 920 to determine whether that block has just been requested.

However, instead of there being a single shift register (324 in Figure 3), a plurality of shift registers 924 are employed.

To allow non-integer warped locations (WX,WY) in the original image to be retrieved, contributions from a plurality of neighbouring integer pixel locations in the original image can be used to generate the corresponding pixel value in the output image. These contributions can be made by weighting the contribution of each of the relevant neighbouring pixels in the original image and adding the respective contributions together.

For example, if a non-integer warped coordinate (WX,WY)= (0.5,2) in the original image is requested, as might be the case if the original image is being scaled up vertically by a factor of two when the output pixel location is (OX,OY)=(2,1), a contribution of 50% from the pixel at the warped location (WX,WY)=(2,0) added to a contribution of 50% from the pixel at the warped location (WX,WY)=(2,1) can be used to give the relevant output pixel value. This gives an interpolated pixel in between the two available integer locations in the original image. Thus, using the nomenclature of Figure 5, if that input image were being upscaled by a factor of two in the vertical direction (so that the output image were an eight-by-four array), the pixel at (OX,OY)=(2,1) in the output image could be $0.5 \times D(a_{20}) + 0.5 \times D(a_{21})$ where $D(a_{ij})$ is the value D of the entry a, at location (i,j) in the original image.

Since both of the contributing pixels are quite likely to be located in the same block of pixels stored in the memory, no additional SDRAM access is required to facilitate this interpolation. Indeed, using the above example, both pixels $a_{20}$ and $a_{21}$ are located in the same block $\{a_{20}, a_{30}, a_{21}, a_{31}\}$ (see Fig. 7) and, thus, in the same location in memory. Conventionally, they were stored in different horizontal lines (see Fig. 6) and, thus, in different locations in memory.

At most four neighbouring pixels in the original image would be required for the interpolation. For example if a non-integer warped location such as (WX,WY)=(2.2,6.9) were sought, a contribution from the pixels at (WX,WY)=(2,6), (WX,WY)=(2,7), (WX,WY)=(3,6) and (WX,WY)=(3,7) may be used, with the weighting of the respective contributions determined according to some predetermined scheme. The weighting may ideally be determined by the proximity of the non-integer coordinate location to the integer locations in the original image that are contributing to it. Thus, in this example, the original pixel at (WX,WY)=(2,7) would contribute significantly more than the original pixel at (WX,WY)=(3,6).

Since the integer pixels in the original image that would contribute to a non-integer pixel will be neighbouring, it is fairly likely that they will either all be located in the same pixel block so that no further SDRAM access is required for the interpolation or will be in a neighbouring block that has either just been accessed from the SDRAM memory or is just about to be accessed. This reduces the likelihood of increased SDRAM activity.

In order to cater for the non-integer location arrangement, an interpolator 928 is provided between the shift registers 924 and the display for output video 926. The interpolator 928 determines the weighting factors, multiplies the pixel value information, D, from each contributing pixel by its respective weighting factor and then performs the summation of these values to arrive at the final output pixel value.

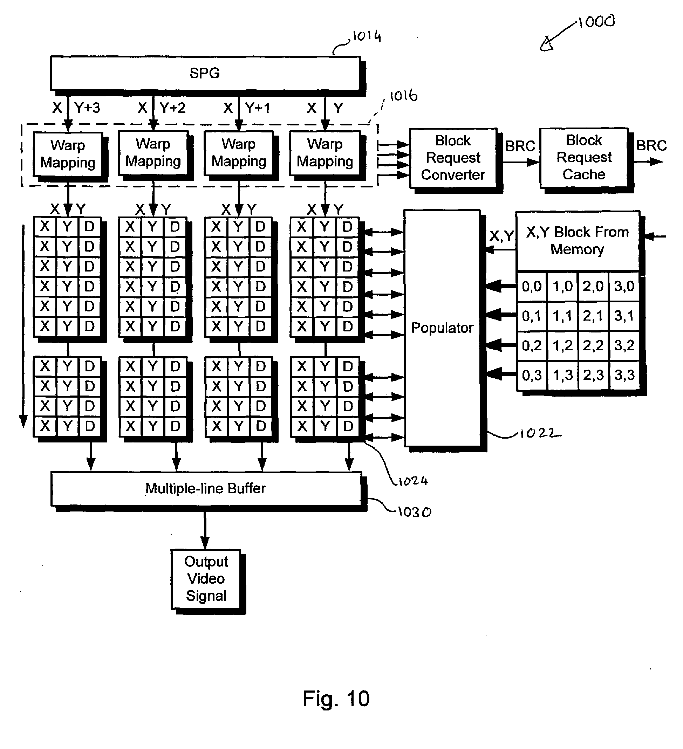

In the above description, the mapper 316, 916 generates a single warped pixel location (WX,WY) - whether an integer or non-integer location - for each output pixel location (OX,OY) generated by the SPG. However, with reference to Figure 10, a modified mapper 1016 could also be arranged to generate the warped coordinates (WX,WY) in the original image for the next line(s) in the output image in response to a single output pixel location (OX,OY) being generated by the SPG. Since each block of pixels retrieved from memory contains several lines of pixels from the original image (four in our example), multiple output lines could be populated substantially simultaneously. This is because subsequent lines in the output image will have corresponding original locations (WX,WY) that differ only slightly from one output line to the next, making it likely that they will be located in the same pixel block in memory.

Thus, if the SPG 1014 generates an output coordinate (OX,OY), the mapper 1016 could generate the corresponding warped coordinate (WX,WY) for that output coordinate (OX,OY), but also the corresponding warped coordinates (WX',WY'), (WX",WY") and (WX"',WY"') for the output coordinates (OX,OY+1), (OX,OY+2) and (OX,OY+3), which represent output coordinates having the same horizontal output coordinate value but having offset vertical output coordinate values. For example when the SPG 1014 generates the origin output coordinate (OX,OY)=(0,0), offset output coordinates (OX,OY+1)=(0,1), (OX,OY+2)=(0,2) and (OX,OY+3)=(0,3) are also generated so that four respective warped coordinates are also simultaneously generated:

$$(OX,OY)=(0,0) \rightarrow (WX,WY);$$

$$(OX,OY+1)=(0,1) \rightarrow (WX',WY');$$

$$(OX,OY+2)=(0,2) \rightarrow (WX'',WY'');$$

and

$$(OX,OY+3)=(0,3) \rightarrow (WX''',WY''').$$

In the example of a four-by-four pixel block being used, four horizontal output lines could be generated simultaneously by the mapper 1016 as shown in Figure 10 with the populator 1022 and the shift registers 1024 being extended accordingly. Thus, a single block of four-by-four pixels retrieved from the SDRAM memory (not shown in Figure 10) can be used to fill in pixel data for all four output lines OY, OY+1, OY+2, OY+3 at once.

Additional line buffers 1030 are provided after the shift registers 1024 to ensure that the additional lines can be processed in the correct order when preparing the output video signal.

This arrangement will greatly reduce the SDRAM load that is required to generate the output signal or image. However, this comes at the expense of increased circuit complexity, since four warping or mapping engines 1016 are required.

Although the arrangements 300, 900 and 1000 described above greatly reduce the processing time for certain image mappings, the populators 322, 922 and 1022 could be replaced by an alternative arrangement which will now be described.

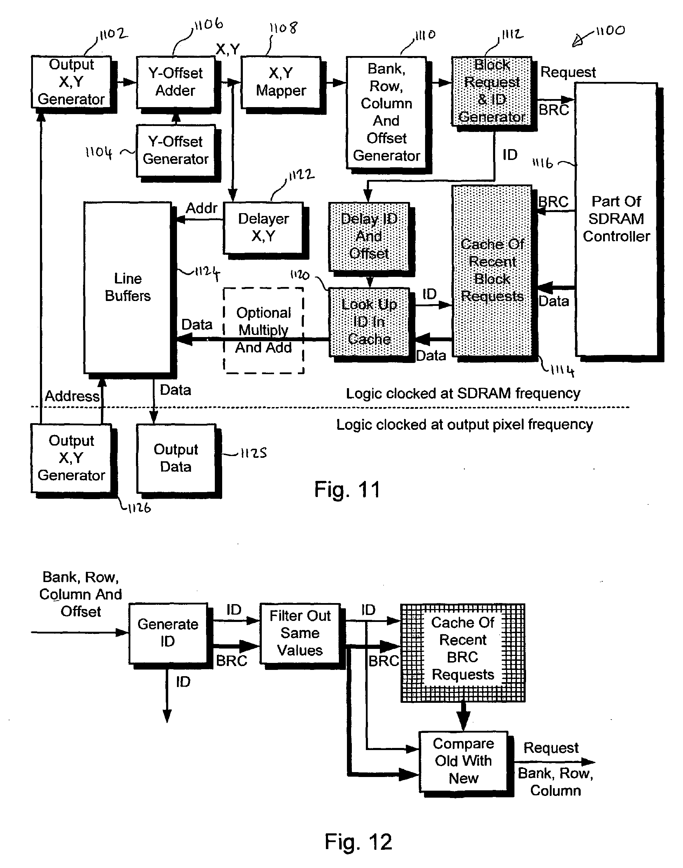

Figures 11 and 12 show an alternative arrangement 1100 for processing image data. An output X,Y generator 1102 operates at SDRAM frequencies to generate output coordinates (OX,OY). This is in the conventional manner of scanning from the upper left-most pixel to the pixel immediately on its right and progressing through all of the horizontal lines until the coordinate of the lower right-most pixel has been generated. Whereas the SPGs 314, 914, 1014 operated at the frequency of the display, i.e. the output pixel frequency, the output X,Y generator 1102 runs at the SDRAM frequency.

A Y-offset generator 1104 generates Y offsets for a predetermined number of horizontal lines of coordinates in the output image. In this example, the predetermined number is four. Thus, the Y-offset generator 1104 generates the Y-offset numbers 0, 1, 2 and 3, which corresponds to four horizontal lines. The Y-offset generator 1104 provides the offset values to a Y-offset adder 1106 which receives the single output coordinate (OX, OY) from the X,Y generator 1102. Thus, for each output coordinate (OX,OY) output from the generator 1102, a further three coordinates (OX,OY+1), (OX,Y+2) and (OX,OY+3) are generated. The output from this part of the arrangement 1100 might be {(0,0), (0,1), (0,2), (0,3)}, {(1,0), (1,1), (1,2), (1,3)} ....

These output coordinates scan a four-pixel-wide strip of output pixels from left to right and then the next strip down from horizontal lines 4 to 7 inclusive for the output image. A single mapper 1108 receives these strips of output coordinates (OX,OY) and generates the corresponding strips of warped coordinates (WX,WY) relating to pixel locations in the original input image. Since these warped coordinates (WX,WY) share similar locations in the SDRAM memory by virtue of the pixels being stored in blocks, it is quite likely that subsequent mapped coordinates (WX,WY) will be in the same or a neighbouring block in storage.

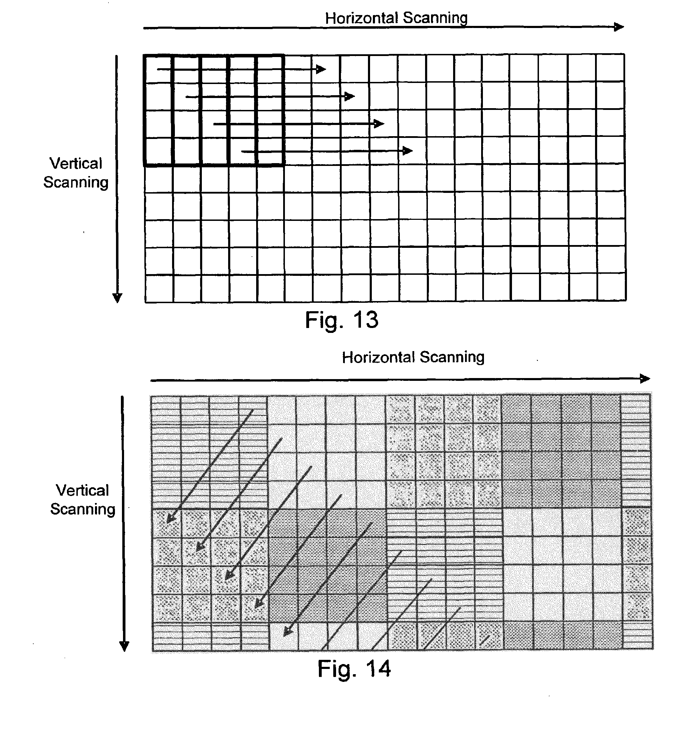

Figures 13 and 14 show 'output strips' scanning horizontally across the output image and 'original stripes' scanning diagonally across the original input image respectively. It can be seen that when the output video is a rotated version of the original video, the original pixel locations (WX,WY) wipe through the set of stored blocks accessing pixels that are generally very close to those in the preceding location. Since the original image was stored in terms of blocks of pixels rather than horizontal lines, the SDRAM memory needs to be accessed less frequently and thus the overall speed of processing is increased.

Returning to Figures 11 and 12, once the original coordinates (WX,WY) have been generated by the mapper 1108, they are passed to a BRC converter 1110. The BRC converter 1110 converts each original or warped coordinate (WX,WY) into a bank, row, column and offset address in the SDRAM memory. In other words, the bank, row column address points to a row and column location in a particular bank of the SDRAM memory in which the block containing the required pixel is located. Once that row and column in the particular bank is accessed, the sixteen-pixel block can be retrieved for processing. The offset value indicates a particular pixel in that particular block. Thus, the offset value for a four-by-four block of pixels would have a value between zero and fifteen. It is preferable to use a value between zero and fifteen, rather than one and sixteen, because fifteen can be represented by four bits, whereas sixteen requires five bits.

Since there can be a large number of rows and columns in each bank in the SDRAM memory, for example 8192 rows and 128 columns in each bank, the BRC value (with offset) may need to be quite large to identify uniquely an individual pixel stored in the SDRAM memory. In order to overcome this, a block request and ID generator 1112 generates an internal ID value for the bank, row and column value. This is, for example, just the lower two significant bits of the bank, row and column addresses put together to form a six-bit address. A different number of lower bits, such as one, three etc could be used depending upon the particular circumstances. This enables $2^6$(=64) memory locations in the SDRAM memory to be identified on the basis of the bank in which they are located and their row and column in that particular bank.

Since the original coordinates (WX,WY) tend to sweep or scan across four-by-four memory blocks, as discussed with reference to Figure 14, at least four banks and either four rows or four columns would be crossed before a new BRC value with the same ID would occur. This equates to around 64 pixels, which means that the ID value will be uniquely valid for at least 64 pixels. Duplicate categories of row and column requests are then filtered out to reduce workload. It is quite likely that there will be duplicate entries of these requests since, given the sweeping nature of the warped coordinates (WX,WY), pixels will be requested from the same block in memory.

A local cache of recent block requests is used to detect new block requests. If a new BRC value is requested, the SDRAM controller 1116 retrieves that particular block from the SDRAM memory. It is to be noted that the six-bit ID value is not used by the SDRAM controller 1116 because it is an internal value that would not be recognised by the SDRAM controller 1116 as an address in SDRAM memory. The SDRAM controller 1116 requires a full BRC address to enable it uniquely to identify the correct location in the SDRAM at which the pixel block is stored. The ID value, which is only one of 64 values in this example, is used as an address into 64 location memories storing the full BRC values. Thus, if a new BRC value with the same ID is detected, a request still goes to the SDRAM controller to get that block from memory.

The ID value generated (along with the offset value, in this case the value between zero and fifteen of the particular pixel within the sixteen-pixel block) for that particular warped location (WX,WY) is passed to a delay generator 1118 to ensure that the SDRAM controller 1116 has had sufficient time to retrieve the required block of pixels from the SDRAM memory. In the meantime, the SDRAM controller 1116 has stored the requested BRC data, the data contained in the block at the relevant BRC address, into a 64-entry cache.

A look-up engine 1120 looks into the cache 1114 using the delayed ID value and offset and stores the retrieved value in a large line buffer memory 1124. In this example, there are at least four line buffers 1124 to which information can be written. The retrieved data values may be subject to interpolation as described above. A delayed output pixel coordinate (OX,OY) has been retained by a delayer 1122 located between the output coordinate (OX,OY)- and warped coordinate (WX,WY)-generating part 1102, 1104, 1106 of the arrangement 1100 and the line buffers 1124. The delayed output coordinate (OX,OY) is used as a pointer for where to store the data in the line buffers 1124.

On the pixel-clock side of the arrangement 1100, another output X,Y generator 1126 which is clocked at the output pixel frequency and counts output locations (OX,OY) normally, rather than adding Y-offsets for stripes, reads out the output pixels from the line buffers 1124 and sends them for further use.

The pixel-clocked side and SDRAM-clocked side need to be in partial synchronisation, so that the line buffers 1124 are filled just ahead of being accessed. A double-buffer approach can be used to ensure that the SDRAM-clocked side accesses the next lines of data while the pixel-clocked side is accessing the previous lines. In other words, the SDRAM- and pixel-clocked logic need to be synchronised such that the SDRAM-side output X,Y generator 1102 writes to one half of the line buffers 1124 while the pixel-side output X,Y logic 1125 reads from the other half of the line buffers 1124. The two halves of the line buffers 1124 then swap over, forming a simple double-buffer system to avoid instances where writing to the line buffers 1124 overtakes reading to them.

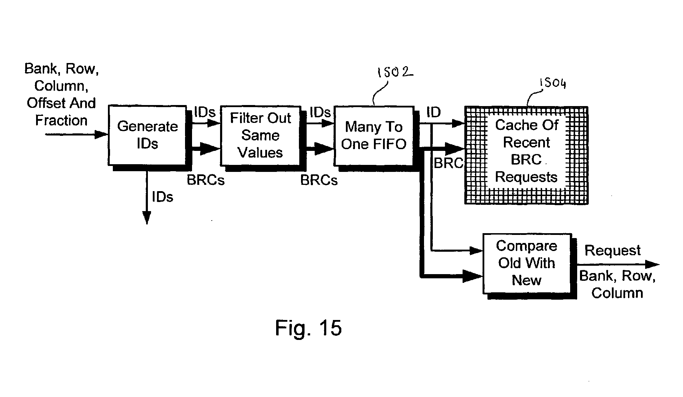

Anti-aliasing or smoothing of an output image can also be achieved using multiple instances of the Block Requestor-Delay-Caching arrangement 1112, 1114, 1118, 1120 (those marked with a patterned background in Figure 11). Data created from a fractional part of an output coordinate (OX,OY) can be used to introduce extra warped coordinates (WX,WY) that will be merged together. The block requestor 1112 would require a many-to-single First in First Out (FIFO) 1502 (see Figure 15) so that only a single BRC cache 1504 is required. Data from the SDRAM controller 1116 would be stored in multiple cache entries or a single multi-port memory with data retrieved from the delayed IDs sent from the block requestor 1112. This data would then be merged together using the fractional values, in a similar way to the interpolation described above into a single pixel for storage in the line buffers 1122.

If multiple input sources are used, they could be stored in different locations in the SDRAM memory 1116. A source-mapping function could be implemented either before or after the mapper 1108 to regenerate the required warped coordinates (WX,WY) to point to a different source in memory 1116. Source-mapping before warp-mapping would allow individual windows to be mapped separately, possibly by different warp functions. Source-mapping after warp-mapping would allow a warp-map to be applied to multiple windows at once.

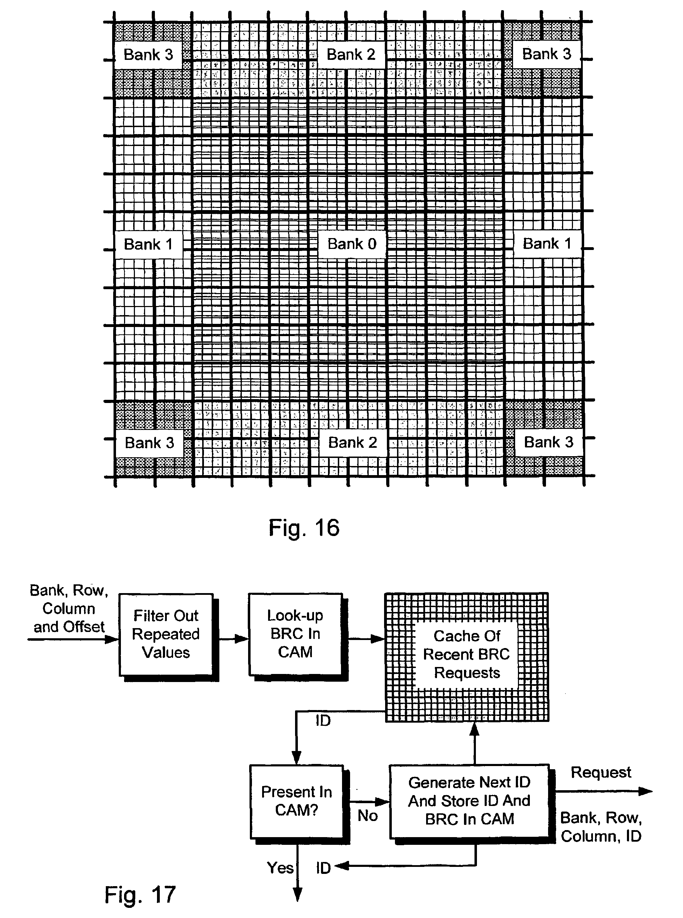

Figure 16 shows an arrangement for storing data in the SDRAM, in accordance with another example embodiment. With reference to Figure 4, neighbouring 4x4 blocks of pixels are stored in different banks in the same SDRAM memory. However, as shown in Figure 16, 64 blocks of 4x4 pixels are stored in the same row in one bank in SDRAM memory. Typically, an SDRAM row consists of 512 column addresses and, as explained previously, each column address can store 2 pixels' worth of image data. Thus, 1024 pixels' worth of information can be stored in each SDRAM row. Since each 4x4 block of sixteen pixels requires 8 column addresses, this means that 64 4x4 blocks can be stored in each SDRAM row. These 64 blocks are stored as an 8x8 array of 16-pixel blocks. This gives a total of 32 x 32 (=1024) pixels in a single SDRAM row in a single bank of the SDRAM memory.

Adjacent 32 x 32 arrays of pixels, each of which requires a single SDRAM row, are stored in different banks in the SDRAM memory, as opposed to different rows in the same bank. This allows fast movement between adjacent arrays of pixels, since different banks can be accessed quickly.

By storing pixels in this way, as pixels are retrieved from the SDRAM, the same SDRAM row remains active for a longer period (e.g., as compared to the arrangement shown in Figure 4). This is because a greater number of adjacent pixels are located in the same SDRAM row. As explained previously, this results in faster processing times because the SDRAM rows need to be opened and closed less frequently. Since all banks in the SDRAM memory can be open simultaneously, this storage arrangement gives substantially instantaneous access to 16x16, 4x4 pixel blocks which equates to 4,096 individual pixels.

Figure 17 shows an arrangement in accordance with another example embodiment, in which a content addressable memory (CAM) enhancement is used. The CAM enhancement allows less memory to be used during readback of the pixels. This is because the CAM can hold a random-access cache of recently used blocks of 4x4 pixels. A whole display line's worth of blocks could be stored in the cache.

As explained previously, standard SDRAM requires a memory address in order to retrieve data from it. Content addressable memory determines which location stores the particular data that is required. Since image warping in rotation requires near random addresses to be obtained from the SDRAM (they are not predictable), the cache of recent block requests 1114 (Fig. 11) would need to be as large as the final display resolution. If the display width were 2048 pixels, a 2048 x 2048 pixel cache would be required, for example if 90° rotation were in use.

In this embodiment, the CAM stores the block location (e.g. (0,0) being the location of the top-left block in the original source image, (1,0) being the one to the right of it etc.) along with the 4x4 pixel data. As block requests are made, the CAM is interrogated for the particular block location of the matching block. If that block does not exist in the CAM, then a request is sent to the SDRAM to retrieve that block. Otherwise, since the CAM location would be known and it would also have the 4x4 pixel data in it, the required block could easily be obtained from the CAM by using the address in the CAM.

In one implementation, the CAM stores the original block location as above, with the CAM address becoming the normal memory cache address (ID) that contained the 4x4 pixels for that block. This means that the CAM can be smaller as it would store less data which can address complexity and expense matters.

In using the CAM, the ID (cache location) value is no longer generated from the lower 2 significant bits of the bank, row and column address as was explained with reference to Figure 12. It is, instead, the CAM address location found after searching for that particular block within the CAM; the memory location that has the matching BRC address as the ID value. If the block location (bank, row, column) data is not found anywhere in the CAM, i.e. if the block having that block location has not previously been retrieved, a new and subsequent CAM memory location having a subsequent location ID is generated using a counter and the requested BRC address is stored in it. A future request for the same BRC will then generate this CAM address, which forms the ID that is passed on, after a delay line, to the 4x4 pixel cache 1114 shown in Figure 11.

Using this approach, the SDRAM memory can be read in a manner that is independent from direction or angle, or according to which warp function. The CAM remembers the recent block requests irrespective of the SDRAM location. The relative approach shown in Figure 12 stores a local cache of neighbouring pixels in a square grid, whereas the CAM approach can store the pixels in any shape.

By way of an example, a 2048 x 2048 pixel output resolution would require at least 512 CAM locations to cover a whole line of pixels, since each CAM location can store 4 pixels' worth of information. The address for each CAM location could be 18 bits wide (2 bits for the bank, 6 bits for the column and 10 bits for the row). Therefore, the CAM size, in bits, would be 512 x 18 which equals 9216 bits. Although this may appear to be a relatively small figure, it would require around 10,000 more logic cells in an FPGA in order to locate the required data. On a typical FPGA, this would take the total number of logic cells to around 20,000, which is likely to be too high to be practical. Thus, this method is more suitable for ASIC usage, unless an external CAM is used.

In some embodiments involving the use of a CAM, the multiple line buffers 1124 shown in Figure 11 are eliminated, and a single line is processed at any one time (e.g., rather than multiple lines).

In the above examples (except the CAM method, since that preserves the data at the end of each line), a single large multi-block cache is used. This large multi-block cache contains smaller blocks, typically 4x4 or 4x2 pixels of a size so that each smaller block could be accessed in a single SDRAM burst.

The cache is only used for a relatively small part of the image with its 'windows' moving across the source image. The cache is not preserved on a line-by-line basis so as the output scans across one output line and onto the next, the cache has to be re-populated; often with the same data as the previous output line.

To improve efficiency, multiple output lines can be warped at once while scanning from left to right on the output side because of the Y offset generator ref. Since multiple output lines are generated from neighbouring source lines, the same cache data gets re-used more than once - thus giving more pixels out from the same SDRAM access.

There are three main areas for further improvement of the above exemplary architecture.

Firstly, if multiple images are warped next to each other on a display, then a separate cache is required for each source image since the above exemplary large cache could not differentiate between one image's data and another. This means that extra caches are required that scale with the number of windows shown on screen, increasing the FPGA resources required.

Secondly, multiple line buffers are required in order to split the multiple lines that have been generated at once into separate lines. This adds to FPGA size and complexity.

Thirdly, the system is split across two frequencies, the output pixel frequency and the SDRAM frequency, which complicates the design slightly.

Furthermore, with reference again to FIG. 16, the smaller 4x4 pixel blocks are stored in SDRAM such that they are easily accessed in one SDRAM burst. Depending on the SDRAM data width, this may be 4x4, 4x2, 2x4, 2x2, 8x4, etc. A number of smaller blocks (sixteen in the example shown in FIG. 16) form a larger 32x32 pixel block, and these blocks are all stored in the same SDRAM row. This allows fast access to pixels in the original or source image in any direction without the SDRAM having to 'precharge' (close) and 'activate' (open) different rows too often. This can result in faster data processing times. Neighbouring 32x32 blocks are stored in different SDRAM banks so that as pixel access back to the original image traverses a row boundary, i.e. when a source pixel from a different larger 32x32 pixel block is sought, SDRAM access still remains fast as it switches to a new SDRAM bank.

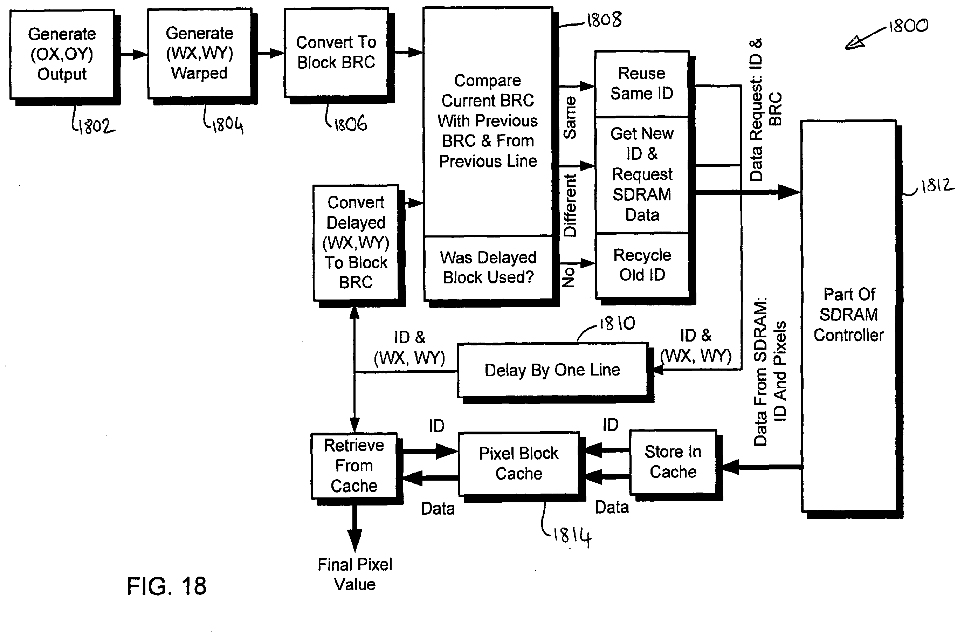

FIG 18 shows an alternative architecture 1800.

In this alternative architecture 1800, the cache does not store a large multi-block of smaller pixel blocks, but instead remembers recently used blocks. Each of the recently used blocks is stored in a separate block cache entry. Only one output line is scanned at a time, which simplifies the architecture. As a result, line buffer blocks are no longer required. Furthermore, with the exception of the SDRAM controller, all other components run at the output pixel frequency, rather than at the SDRAM frequency.

An SPG 1802 generates a pair of output co-ordinates (OX,OY). These scan from left to right, and top to bottom, as in all standard video systems and as described above.

The output coordinates (OX,OY) are warped by a warp engine 1804 to generate warped coordinates (WX,WY). As above, the warped coordinates (WX,WY) indicate the desired pixel location in the original source image.

As the warped (WX,WY) pixel calculations are made, they are converted into a source block SDRAM location by a block request converter 1806 , the memory location being in the form of a block BRC (bank, row and column). This is the memory location of the 4x4 pixel block that contains the required (WX,WY) pixel.

This block SDRAM location is compared by a comparator 1808 against the SDRAM location of warped pixels generated from neighbouring output pixels: the previous pixel (OX-1,OY) on the same line and the neighbouring pixels in the immediately preceding line (OX-1,OY-1), (OX,OY-1) and (OX+1,OY-1). These are obtained from a line delay which will be described in more detail below.

Since the current SDRAM location is being compared with other SDRAM locations that correspond to output pixel locations (OX,OY) that are only one pixel away on the output screen, it is quite likely that there will be match. In other words, this means that the currently sought pixel is likely to be found in a pixel block that has already been retrieved from the SDRAM. As a result, the system will not have to request this data again from the SDRAM, since that data has just recently been retrieved.

If a BRC match is found, then the ID of that previous matching block is copied and passed to the line delay 1810.

If no match is found, then the next available ID number is used and passed to the line delay 1810. A request is sent to the SDRAM controller 1812 to retrieve the required block of pixels from SDRAM and to store it in the pixel block cache 1814 at that location (ID).

The purpose of passing the ID and current warped locations (WX,WY) into a line delay 1810 is two-fold. Firstly, it provides the SDRAM controller 1812 with sufficient time to retrieve the required pixel blocks. Secondly, it allows the comparison mentioned in the previous steps, where BRCs corresponding to warped locations (WX,WY) are compared against ones from the previous output line.

The output from the line delay 1810 then feeds back into the block comparator 1808 mentioned above so that it can be used for the comparison when the next output line of pixels is warped. The output is also used to retrieve the currently required pixel from the block cache using the ID value.

The correct pixel is retrieved from the block cache 1814 using the ID value and based on the lower bits from the (WX,WY) value. This is then output to the display.

In this example, SDRAM access only occurs when strictly needed. In a typical warped or rotated image, neighbouring source pixels (WX,WY) are still near each other in the output image (OX,OY) and are, therefore, likely to be in the same block of pixels stored in the SDRAM memory. The comparison or 'neighbour' check above ensures that any previous block retrieved from SDRAM in the pixel block cache is reused as much as possible.

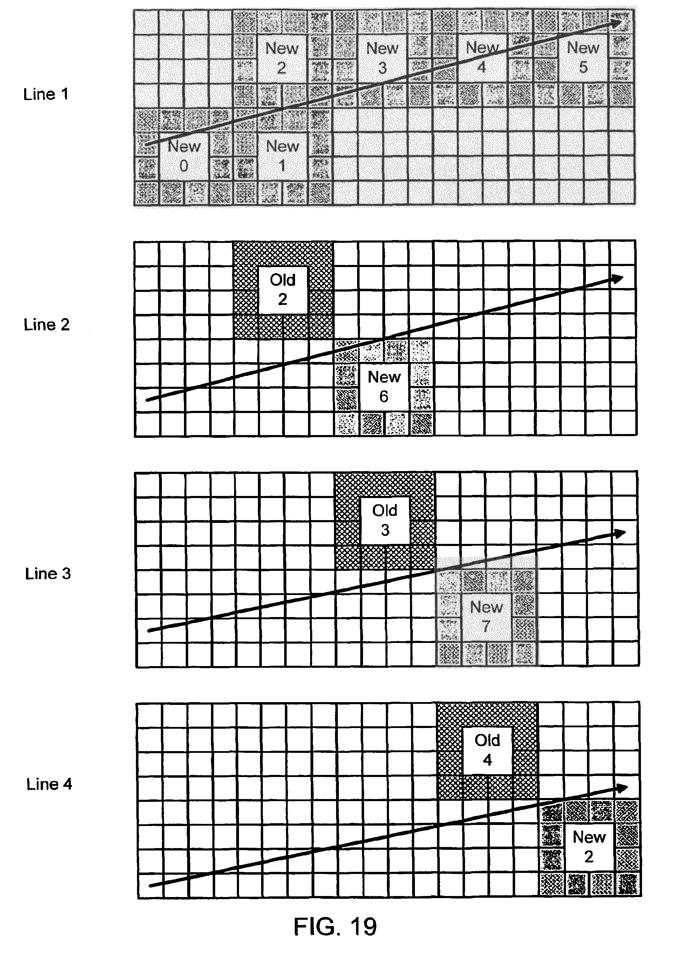

FIG. 19 shows an example of pixel blocks stored in the pixel block cache being re-used. The arrow in FIG. 19 indicates the scanning path of pixels in the original source image. The arrow is at a slight angle, and increments down one line for each output line.

As would be expected, the first output line requires that all of the necessary pixel blocks be accessed from the SDRAM memory itself since the pixel block cache would be empty and there would be no warped locations (WX,WY) in the line delay. However, each subsequent output line requires fewer blocks to be retrieved from the SDRAM, since the arrow traverses the same blocks that have been used in the previous line. Indeed, for the second, third and fourth output lines in this example, only one new block is retrieved from the SDRAM; the other five pixel blocks from which pixels are sought are already stored in the pixel block cache.

The block cache described above should be large enough to hold just over one line of video data. This is because of the need to keep the blocks required for one output line ready in case they are used on the next output line.

For example, for a 1920x1080 output resolution, a non-rotated mapping would require pixel block cache capable of storing approximately 512 4x4 blocks. This is because 4x512=2048, which is enough to cover the 1920 pixels in a horizontal output line.

For 90 degree rotation, a smaller number of blocks are required since only 1080 pixels are output horizontally across the display.

For 45 degree rotation, more blocks may be needed to display one horizontal output line, since the number of diagonal pixels output across the display could be higher because the hypotenuse of a 1920 x 1080 triangle is 2202 pixels.

Data caching is usually straightforward to implement. However, in this case, the ID generator needs to keep track of which IDs are available to use and which are currently in use and are, therefore, not available. In this implementation, the IDs correspond to the pixel block cache address, i.e. where in the cache block of pixels is stored. Over a whole frame, some pixel blocks are re-used more than others. This is especially the case with bizarre warps, and even with some rotations. Thus, the ID generator cannot simply issue ID numbers in order and then wrap around to the beginning again once a maximum ID value has been allocated (e.g. 0 to 511, 0 to 511, etc.).

Either the pixel block cache has to be large enough in order to handle the maximum number of times that an ID may get repeatedly used which could stretch across many lines - perhaps even the whole image - or it needs to know which IDs can be reused and which cannot.

Therefore the block cache has to be intelligent enough to know not to overwrite block cache (ID) entries that are in use (i.e. required by the current output line), and to reuse block cache (ID) entries that are no longer required (i.e.

were used to output the previous line, but are not used in the current output line). Implementing this in an FPGA is relatively difficult.

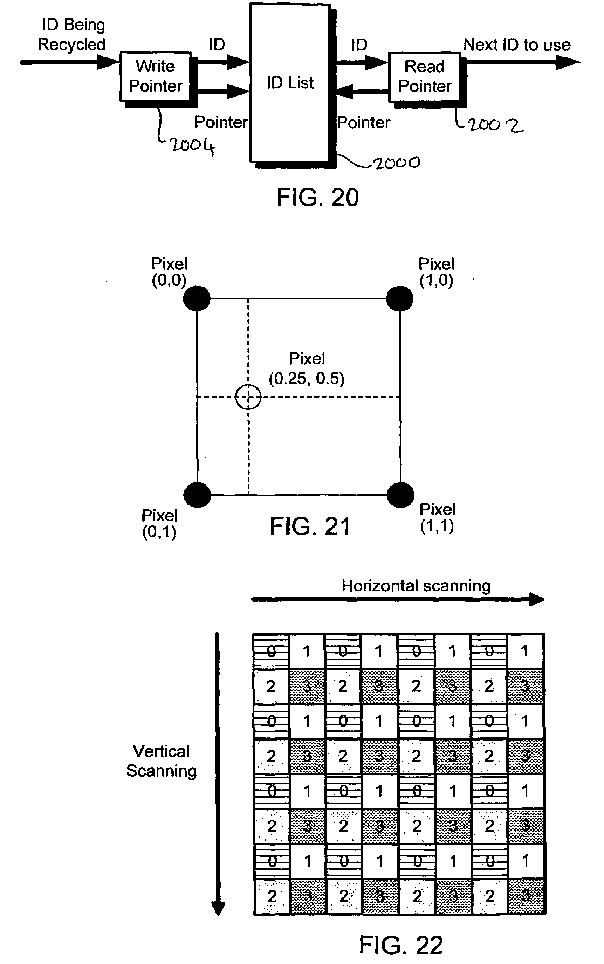

FIG. 20 shows one arrangement by means of which this intelligence can be implemented in an FPGA.

An ID list 2000 is stored in memory. The ID list has one location for each block of cached pixels, corresponding to the memory address. The ID list is ideally reset at the top of each frame, to list all IDs in order (0,1,2,3,4...510,511) in the case of a 512-block cache, i.e. a cache having 512 memory locations.

A read pointer 2002 and a write pointer 2004 are created, both starting at 0. The read pointer points to the next-available ID value that can be used. The write pointer points to where any freed-up or recycled ID value is written back. When a new ID value is required, it is read from the read pointer since the read pointer points to the next-available ID value that can be used.

For the first output line, the read pointer is increment by one since the next available ID value will be useable. The read pointer is then ready to output the next available ID value from the ID list. Since the first line output requires new data to be retrieved from the SDAM, the read pointer will now be pointing at a fairly large value. For example, in the case of a 1920x1080 output resolution, it may be pointing at the number 480. This is because 480 4-pixel wide blocks could have been requested, each with their own unique ID value. At this point, the write pointer, which points to where any freed-up or recycled ID value is written back, is still at 0 since no IDs values have been freed up or recycled.

When the pixels from the second output line are being calculated, although some of the IDs that were unused by the first output line will still be available, some will have SDRAM block locations that match those from the first output line.

Where the first line's ID value is found to be reused, no change to the ID list is made since that ID is still in circulation. However, where the first line's ID value is found not to be reused, that ID value is written back into the ID list at the write pointer location and the write pointer is incremented. This pulls that ID out of circulation and puts it back into the ID list ready for future use.

Thus, any ID values from the first line that are not reused on the second line are written back into the ID list. The ID values are often written back into the ID list in the same order in which they were read out, although this depends on the warp or rotation involved. This process continues for each subsequent output line, with the ID list having the next available ID values being read from it with the read pointer incrementing, at the same time as any unused IDs are written back in with the write pointer incrementing.

This ensures that no matter how often a particular ID is reused, it will never get overwritten since an ID that is frequently reused does not get written back into the ID list. Instead, it remains in circulation in the one-line delay until no longer required, at which point it is written back into the ID list. In the case of some warps, it is possible that an ID value is used in respect of every output line from top to bottom.

The ID list (of available IDs), plus the IDs 'in circulation' in the one-line delay, when combined, should always give a full list of IDs where there are no duplicates or omissions. The logic used to create and maintain this list must ensure that once an ID has been reused in pixel number N, it is also available for reuse for pixels N+1, N+2, N+3, etc. but only if none of them require a different ID beforehand, i.e. a new one from the ID list, or a different one from the previous line.

For example, suppose the first line of pixels uses the follows IDs:

Line 1:  0   0   0   0   1   1   1   1   2   2   2...

And the next line tries to reuse them as follows, where '50' is a request for a new ID:

Line 2  0   0   0   0   1   50   50   1   2   2   2...

It can be seen that ID #1 has been 'split' by the new ID request. Once the following line is generated, it may be:

Line 3  0   0   0   0   50   50   50   50   2   2   2...

In this case both of the ID # 1s from Line 2 will be put back into the ID list, thus forming a duplicate in the ID List and causing corruption in the final image.

The solution to this is only to allow a continuous reuse of an ID from a previous line. So instead of the above, the following would occur:

| | | | | | | | | | | |
|---|---|---|---|---|---|---|---|---|---|---|
| Line 1 2... | 0 | 0 | 0 | 0 | 1 | 1 | 1 | 1 | 2 | 2 |
| Line 2 2... | 0 | 0 | 0 | 0 | 1 | 50 | 50 | 51 | 2 | 2 |
| Line 3 2... | 0 | 0 | 0 | 0 | 50 | 50 | 50 | 50 | 2 | 2 |

The second use of ID '1' has been prevented since there was a discontinuity in its use. Thus, since it could not be re-used, a new ID, 51, is generated instead and this causes a fresh request of that same pixel block from SDRAM. In other words, the same pixel block is held in IDs 1 and 51. This slight inefficiency only occurs rarely and is necessary to prevent ID list corruption.

FIG. 21 shows bi-linear interpolation. Bi-linear interpolation is used to turn a non-integer source pixel location (WX,WY) into a set of integer source pixel location values and multiplication values. The idea is well-known as a way of interpolating what an in-between pixel value should be, based on its surrounding pixels.

The solid circles in FIG. 21 indicate integer pixel coordinates having known values that are present in SDRAM memory. The hollow circle indicates the non-integer pixel location (WX,WY)=(fx,fy), whose value is determined based on weighted contributions of the values of the surrounding integer pixels. A simple well-known calculation can be used to generate this non-integer pixel value:

$$D(fx,fy) = P(0,0)*(1-fx)*(1-fy) + P(1,0)*fx*(1-fy) + P(0,1)*(1-fx)*fy + P(1,1)*fx*fy$$

Thus, in the illustrated example where (WX,WY)=(fx,fy)=(0.25,0.5), the value, D, of the non-integer pixel can be found by:

$$D(0.25,0.5) = P(0,0)*(1-0.25)*(1-0.5) + P(1,0)*0.25*(1-0.5) + P(0,1)*(1-0.25)*0.5 +$$

$$P(1,1)*0.25*0.5$$

$$= P(0,0)*0.375 + P(1,0)*0.125 + P(0,1)*0.375 + P(1,1)*0.125$$

To perform bi-linear interpolation, four neighbouring pixels need to be accessed simultaneously.

It will be recalled from above that non-integer warped coordinates (WX,WY) can be handled by using bi-linear interpolation. FIG. 22 shows one possible way in which this can be achieved using a pixel cache by splitting the pixel block cache into multiple parts which can be read from simultaneously. As shown in FIG. 22, the data is stored in the pixel block cache such that neighbouring pixels are stored in one of four different cache areas (0,1,2,3).

In FIG. 22, four different 4x4 pixel blocks are shown, each containing sixteen pixels. Four different memory areas are used to store the pixels, the number shown on the pixel indicating the area in which it is stored. In this way, memory area 0 maps to even WX and even WY coordinates (e.g. (0,0)), memory area 1 maps to odd WX and even WY coordinates (e.g. (1,0)), memory area 2 maps to even WX and odd WY coordinates (e.g. (0,1)) and memory area 3 maps to odd WX and odd WY coordinates (e.g. (1,1)).

Each block of 4x4 pixels still has the same ID value assigned to it as would be assigned if there were only a single cache area. However, the sixteen pixels in each 4x4 block are spread across four different memory stores (0,1,2,3). This enables simultaneous access to any four neighbouring pixels one of which will be from each of memory 0,1,2 and 3.

Even if the required pixels are the centre four pixels shown in FIG.22 straddling four different 4x4 blocks and ID values, the same four memory areas still provide the above advantage, but each receive different ID values because the four centre pixels are in different 4x4 pixel blocks and cache locations.

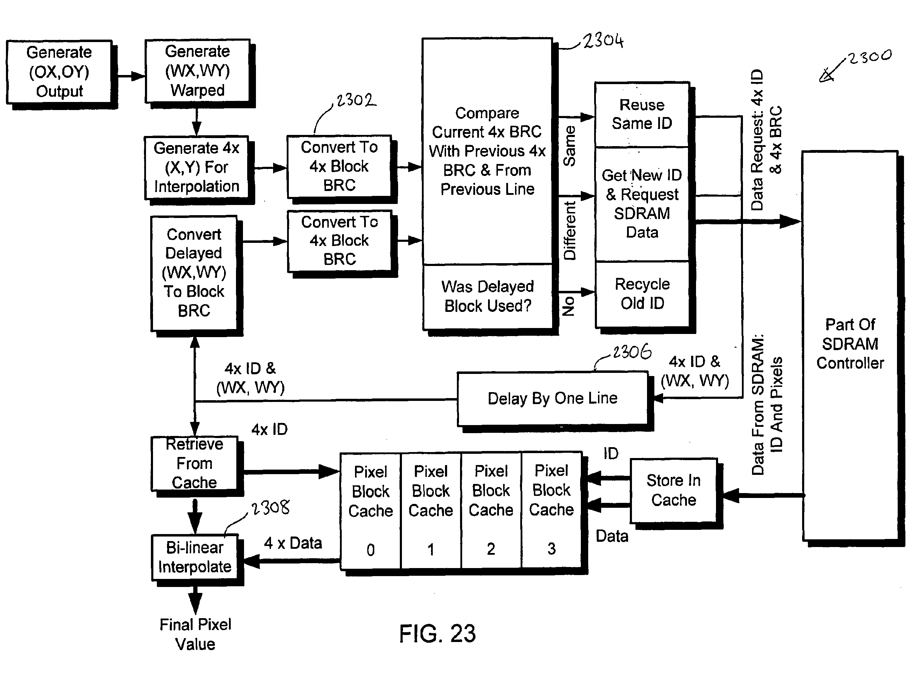

FIG. 23 shows how the data processing architecture 2300 can be adapted to permit bi-linear interpolation in this manner.

A non-integer (WX, WY) value is converted by a converter 2302 into the four neighbouring integer coordinates required in order to perform bi-linear interpolation. Each of these integer coordinates is converted to identify the SDRAM location (bank, row and column) of the pixel block in which the integer-coordinate pixels are located.

These BRC values are compared by a comparator against the previous output pixel's set of four BRC values as well as the set of four BRC values for the three neighbouring pixels in the output line above. If a match is found, i.e.

if that BRC value has already been requested, then the corresponding ID is reused. If no match is found, i.e. if the BRC was not requested, then one of four ID lists generates the next ID required, and an SDRAM request is made accordingly to retch the relevant block of pixels from its memory. Each ID list is assigned to a different pattern of blocks such that up to 4 different blocks may be accessed at once, as in the case where the bi-linear interpolation circuit's 4 required pixels straddle across the boundary between 4 blocks.

The four IDs and warped (WX, WY) coordinates are fed to the one-line delay 2306. These values are fed back to the comparator for comparative purposes when processing the subsequent output line and are passed to the cache read section in order to retrieve the four integer-coordinate pixels required from their respective cache memory areas (0,1,2,3). Bi-linear interpolation can then be performed by an interpolator 2308 using the four integer pixel values to generate the final interpolated single pixel.

While certain aspects of the present invention have been described with reference to several particular example embodiments, those skilled in the art will recognize that many changes may be made thereto without departing from the scope of the present invention as defined by the claims. For example, the various circuits, memories and related components may be implemented in connection with a variety of different approaches, which may involve one or more of computers, programmable circuits, processor-readable media containing instructions that cause a computer to carry out steps upon execution, and others. Aspects of the invention are set forth in the following claims.

**Claims**

1. Apparatus for displaying a warped version of a source image, comprising:

   line memory (306) arranged to divide the source image into a plurality of rows of pixels from the source image;
   a warp engine arranged to map the output coordinates OX,OY to warped coordinates WX, WY , the warped coordinates corresponding to pixel locations in the source image;
   a block storage control (308) arranged to combine the rows of pixels into pixel blocks, each pixel block comprising neighbouring horizontal and vertical pixels from the source image, wherein each pixel block is stored in sequential memory locations in a memory, and each warp coordinate having a corresponding bank, row and column address in the memory;
   an output coordinate generator (316) arranged to generate output coordinates OX,OY corresponding to output pixel locations on a display;
   a block request converter (918) arranged to identify memory locations in which pixel blocks containing pixels having the warped coordinates WX,WY are stored;
   a block request generator arranged to request the identified pixel blocks;
   a memory controller arranged to retrieve the requested pixel blocks from the memory;
   a display controller arranged to output the value of the pixels having the warped coordinates WX,WY for display at the corresponding output pixel locations OX,OY ; and
   a block request cache (920) to record addresses of recently retrieved pixel blocks.

2. Apparatus according to claim 1, wherein the memory comprises SDRAM (312), wherein each pixel block is stored across sequential columns in the SDRAM and wherein the block request converter is arranged to identify the bank, row and column addresses in which the required pixel blocks are stored.

3. Apparatus according to claim 2, wherein neighbouring pixel blocks of the source image are grouped together into a larger pixel block and each larger pixel block is stored in the same SDRAM row.

4. Apparatus according to any preceding claim, further comprising a vertical offset generator engine arranged to:

   receive an output coordinate OX,OY generated by the output coordinate generator and to generate a plurality of offset output coordinates OX,OY+1 , OX,OY+2 ... , each offset output coordinate being vertically offset from the non-offset output coordinate OX,OY; and
   provide the output coordinates OX,OY , OX,OY+1 , OX,OY+2 ... to the warp engine.

5. Apparatus according to any preceding claim, further comprising:

   a shift register (324) arrangement arranged to store a plurality of warped coordinates WX, WY entries, each warped coordinate entry having a field for its respective data value D; and
   a populator (322) arranged to compare the warped coordinates in the shift register arrangement with warped coordinates of the pixels in any retrieved pixel block and, upon a positive comparison, to complete the field for the matched warped pixel's data value D.

6. Apparatus according to any preceding claim, further comprising:

an ID generator (1112) arranged to receive identified memory locations from the block request converter (1806) and generate internal pixel block IDs from the identified memory locations;
an ID delay line (1810) arranged to receive and delay the pixel block IDs from the ID generator; and
a look-up engine (1808) arranged to receive the pixel block IDs from the delay line and retrieve pixel blocks having matching pixel block IDs from a cache.

7. Apparatus according to claim 6, further comprising an ID list arranged to store a list of pixel block IDs that are not in use, a read pointer arranged to point to the next available block ID value that can be used and a write pointer arranged to point to a recycled block ID.

8. Apparatus according to claim 6 or 7, further comprising a block ID comparator (2304) arranged to receive identified memory locations from the block request converter, compare them with memory locations of recently identified blocks and, if a match is found, to reuse the block ID of the pixel block having the matching memory location and, if no match is found, to use a new block ID for the identified pixel block.

9. Apparatus according to any preceding claim, further comprising a block request cache (320) arranged to store recent pixel block retrieval requests, whereby the memory controller (310) is arranged not to retrieve a requested pixel block if it has just been requested or retrieved from the memory.

10. Apparatus according to any preceding claim, wherein the memory controller (310) is arranged to store retrieved pixel blocks in a cache.

11. Apparatus according to claim 10, wherein the memory controller (310) is arranged to store neighbouring pixels in the pixel blocks in different areas of the cache.

12. Apparatus according to claim 10 or 11, wherein the cache comprises a content-addressable memory.

13. Apparatus according to any preceding claim, wherein the output coordinate generator comprises a sync pulse generator (314) arranged to generate the output coordinates at an output pixel frequency.

14. Apparatus according to any preceding claim, comprising:

an interpolator (928) arranged to perform bi-linear interpolation when the warp engine maps the output coordinates OX,OY to non-integer warped coordinates WX,WY , and wherein:

the block request converter is arranged to identifying the warped coordinates WX,WY of pixels in the source image that contribute to the non-integer warped pixel coordinate WX,WY and identify the memory locations in which the pixel blocks containing the contributing pixels are stored;
the block request generator is arranged to request the identified pixel blocks;
the memory controller is arranged to retrieve the requested pixel blocks from the memory;
the interpolator is arranged to determine an interpolated output value of the output pixel OX,OY corresponding to the non-integer warped coordinate WX,WY ; and
the display controller is arranged to output the interpolated value for display at the corresponding output pixel location OX,OY.

15. A method for displaying a warped version of a source image, the method comprising:

dividing the source image into a plurality of rows of pixels from the source image;
combining the rows of pixels into pixel blocks, each pixel block comprising neighbouring horizontal and vertical pixels from the source image, and storing each pixel block in sequential memory locations in a memory;
allocating fixed locations in the sequential memory to coordinates in the source image;
generating output coordinates OX,OY corresponding to output pixel locations on a display;
mapping the output coordinates OX,OY to warped coordinates WX,WY , the warped coordinates corresponding to pixel locations in the source image;
identifying memory locations in which pixel blocks containing pixels having the warped coordinates WX,WY are stored;
requesting the identified pixel blocks;
retrieving the requested pixel blocks from the memory; and
outputting the value of the pixels having the warped coordinates WX, WY for display at the corresponding output pixel locations OX,OY,
recording the memory locations of recently requested blocks in a block memory cache.

16. A computer program comprising instructions which, when executed, cause a data processing apparatus to perform a method according to any preceding claim.

17. A computer-readable medium comprising a computer program as claimed in claim 16 or a signal carrying a computer program as claimed in claim 16.

**Patentansprüche**

1. Vorrichtung zum Anzeigen einer verzerrten Version eines Quellbildes, mit:

einem Zeilenspeicher (306), der ausgelegt ist zum Aufteilen des Quellbilds in mehrere Reihen von Pixeln aus dem Quellbild;
einer Warp-Maschine, die ausgelegt ist zum Abbilden der Ausgangskoordinaten OX,OY in verzerrte Koordinaten WX,WY, wobei die verzerrten Koordinaten Pixel-Stellen in dem Quellbild entsprechen;
einer Blockspeichersteuervorrichtung (308), die ausgelegt ist zum Kombinieren der Reihen von Pixeln zu Pixel-Blöcken, wobei jeder Pixel-Block benachbarte horizontale und vertikale Pixel aus dem Quellbild aufweist, wobei jeder Pixel-Block an sequentiellen Speicherstellen in einem Speicher gespeichert wird, und jede Verzerrungs-Koordinate eine entsprechende Bank-, Reihen- und Spalten-Adresse in dem Speicher hat;
einem Ausgangskoordinaten-Generator (316), der ausgelegt ist zum Generieren von Ausgangskoordinaten OX,OY, die Ausgangs-Pixel-Stellen auf einer Anzeige entsprechen;
einem Block-Anforderungs-Konverter (918), der ausgelegt ist zum Identifizieren von Speicherstellen, an denen Pixel-Blöcke, die Pixel mit den verzerrten Koordinaten WX,WY enthalten, gespeichert sind;
einem Block-Anforderungs-Generator, der ausgelegt ist zum Anfordern der identifizierten Pixel-Blöcke;
einer Speicher-Steuervorrichtung, die ausgelegt ist zum Aufrufen der angeforderten Pixel-Blöcke aus dem Speicher;
einer Anzeige-Steuervorrichtung, die ausgelegt ist zum Ausgeben des Werts der Pixel mit den verzerrten Koordinaten WX,WY zur Anzeige an den entsprechenden Ausgangs-Pixel-Stellen OX,OY; und
einem Block-Anforderungs-Cache (920) zum Aufzeichnen von Adressen kürzlich aufgerufener Pixel-Blöcke.

2. Vorrichtung nach Anspruch 1, bei der der Speicher einen SDRAM (312) aufweist, wobei jeder Pixel-Block entlang sequentieller Spalten in dem SDRAM gespeichert wird und wobei der Block-Anforderungs-Konverter ausgelegt ist zum Identifizieren der Bank-, Reihen- und Spalten-Adressen, an denen die angeforderten Pixel-Blöcke gespeichert sind.

3. Vorrichtung nach Anspruch 2, bei der benachbarte Pixel-Blöcke des Quellbilds zu einem größeren Pixel-Block gruppiert werden und jeder größere Pixel-Block in der gleichen SDRAM-Reihe gespeichert wird.

4. Vorrichtung nach einem der vorhergehenden Ansprüche, ferner mit einer Vertikal-Offset-Generatormaschine, die ausgelegt ist:

zum Empfangen einer durch den Ausgangskoordinaten-Generator erzeugten Ausgangskoordinate OX,OY und zum Erzeugen mehrerer Offset-Ausgangskoordinaten OX,OY+1, OX,OY+2 ..., wobei jede Offset-Ausgangskoordinate ausgehend von der nicht versetzten Ausgangskoordinate OX,OY vertikal versetzt wird; und
zum Ausgeben der Offset-Ausgangskoordinaten OX,OY, OX,OY+1, OX,OY+2 an die Warp-Maschine.

5. Vorrichtung nach einem der vorhergehenden Ansprüche, ferner mit:

einer Schieberegister-Anordnung (324), die ausgelegt ist zum Speichern mehrerer Einträge verzerrter Koordinaten WX,WY, wobei jeder Eintrag verzerrter Koordinaten ein Feld für seinen jeweiligen Datenwert D aufweist; und

einen Populator (322), der ausgelegt ist zum Vergleichen der verzerrten Koordinaten in der Schieberegisteranordnung mit verzerrten Koordinaten der Pixel in jedem aufgerufenen Pixel-Block und, bei positivem Vergleich, Vervollständigen des Felds für den Datenwert D des passenden verzerrten Pixels.

6. Vorrichtung nach einem der vorhergehenden Ansprüche, ferner mit:

einem ID-Generator (1112), der ausgelegt ist zum Empfang identifizierter Speicherstellen aus dem Block-Anforderungs-Konverter (1806) und zum Erzeugen interner Pixel-Block-IDs aus den identifizierten Speicherstellen; einer ID-Verzögerungsleitung (1810), die ausgelegt ist zum Empfangen und Verzögern der Pixel-Block-IDs aus dem ID-Generator; und einer Look-up-Maschine (1808), die ausgelegt ist zum Empfangen der Pixel-Block-IDs aus der Verzögerungsleitung und zum Aufrufen von Pixel-Blöcken mit passenden Pixel-Block-IDs aus einem Cache.

7. Vorrichtung nach Anspruch 6, ferner mit einer ID-Liste, die ausgelegt ist zum Speichern einer Liste von Pixel-Block-IDs, die nicht verwendet werden, einem Lese-Pointer, der ausgelegt ist zum Verweisen auf den nächsten verfügbaren Block-ID-Wert, der verwendet werden kann, und einem Schreib-Pointer, der ausgelegt ist zum Verweisen auf eine recycelte Block-ID.

8. Vorrichtung nach Anspruch 6 oder 7, ferner mit einem Block-ID-Komparator (2304), der ausgelegt ist zum Identifizieren von Speicherstellen aus dem Block-Anforderungs-Konverter, Vergleichen derselben mit Speicherstellen kürzlich identifizierter Blöcke und, falls eine Entsprechung festgestellt wird, Wiederverwenden der Block-ID des Pixel-Blocks mit der passenden Speicherstelle, und, falls keine Entsprechung festgestellt wird, Verwenden der neuen Block-ID für den identifizierten Pixel-Block.

9. Vorrichtung nach einem der vorhergehenden Ansprüche, ferner mit einem Block-Anforderungs-Cache (320), der ausgelegt ist zum Speichern kürzlich ergangener Pixel-Block-Aufruf-Anforderungen, wobei die Speichersteuervorrichtung (310) derart ausgelegt ist, dass sie einen angeforderten Pixel-Block nicht aufruft, falls er gerade aus dem Speicher angefordert oder aufgerufen worden ist.

10. Vorrichtung nach einem der vorhergehenden Ansprüche, bei der die Speichersteuervorrichtung (310) ausgelegt ist zum Speichern aufgerufener Pixel-Blöcke in einem Cache.

11. Vorrichtung nach Anspruch 10, bei der die Speichersteuervorrichtung (310) ausgelegt ist zum Speichern in den Pixel-Blöcken benachbarter Pixel in unterschiedlichen Bereichen des Cache.

12. Vorrichtung nach Anspruch 10 oder 11, bei der der Cache einen inhaltsadressierbaren Speicher aufweist.

13. Vorrichtung nach einem der vorhergehenden Ansprüche, bei der Ausgangskoordinaten-Generator einen Sync-Pulse-Generator (314) aufweist, der ausgelegt ist zum Erzeugen der Ausgangskoordinaten mit einer Ausgangs-Pixel-Frequenz.

14. Vorrichtung nach einem der vorhergehenden Ansprüche, mit:

einem Interpolator (928), der ausgelegt ist zum Durchführen bilinearer Interpolation, wenn die Warp-Maschine die Ausgangskoordinaten OX,OY auf nicht ganzzahlige verzerrte Koordinaten WX,WY abbildet, und bei dem:

der Block-Anforderungs-Konverter ausgelegt ist zum Identifizieren der gekrümmten Koordinaten WX,WY von Pixeln in dem Quellbild, die zu der Koordinate WX,WY der nicht ganzzahligen verzerrten Pixel beitragen, und zum Identifizieren der Speicherstellen, an denen die Pixel-Blöcke gespeichert sind, welche die beitragenden Pixel enthalten, der Block-Anforderungs-Generator ausgelegt ist zum Anfordern der identifizierten Pixel-Blöcke, die Speicher-Steuervorrichtung ausgelegt ist zum Aufrufen der angeforderten Pixel-Blöcke aus dem Speicher; der Interpolator ausgelegt ist zum Bestimmen eines interpolierten Ausgangswerts des Ausgangs-Pixels OX,OY, welcher der nicht verzerrten gekrümmten Koordinate WX,WY entspricht; und die Anzeige-Steuervorrichtung ausgelegt ist zum Ausgeben des interpolierten Werts zur Anzeige an der entsprechenden Pixel-Stelle OX,OY.

15. Verfahren zum Anzeigen einer verzerrten Version eines Quellbildes, wobei das Verfahren umfasst:

Aufteilen des Quellbilds in mehrere Reihen von Pixeln aus dem Quellbild;
Kombinieren der Reihen von Pixeln zu Pixel-Blöcken, wobei jeder Pixel-Block benachbarte horizontale und vertikale Pixel aus dem Quellbild aufweist, und Speichern jedes Pixel-Blocks an sequentiellen Speicherstellen in einem Speicher;
Zuweisen fester Stellen in dem sequentiellen Speicher zu Koordinaten in dem Quellbild;
Generieren von Ausgangskoordinaten OX,OY, die Ausgangs-Pixel-Stellen auf einer Anzeige entsprechen;
Abbilden der Ausgangskoordinaten OX,OY auf verzerrte Koordinaten WX,WY, wobei die verzerrten Koordinaten Pixel-Stellen in dem Quellbild entsprechen;
Identifizieren von Speicherstellen, an denen Pixel-Blöcke, die Pixel mit den verzerrten Koordinaten WX,WY enthalten, gespeichert sind;
Anfordern der identifizierten Pixel-Blöcke;
Aufrufen der angeforderten Pixel-Blöcke aus dem Speicher; und
Ausgeben des Werts der Pixel mit den verzerrten Koordinaten WX,WY zur Anzeige an den entsprechenden Ausgangs-Pixel-Stellen OX,OY; und
Aufzeichnen der Speicher-Stellen kürzlich angeforderter Blöcke in einem Block-Speicher-Cache.

16. Computerprogramm mit Instruktionen, die, wenn sie ausgeführt werden, eine Datenverarbeitungsvorrichtung zum Durchführen eines Verfahrens nach einem der vorhergehenden Ansprüche veranlassen.

17. Computerlesbares Medium mit einem Computerprogramm nach Anspruch 16 oder einem Signal, das ein Computerprogramm nach Anspruch 16 trägt.

**Revendications**

1. Appareil pour afficher une version déformée d'une image source, comprenant :

une mémoire de ligne (306) conçue pour diviser l'image source en une pluralité de rangées de pixels à partir de l'image source ;
un moteur de déformation conçu pour configurer les coordonnées de sortie OX,OY en coordonnées déformés WX, WY, les coordonnées déformées correspondant aux positions de pixels dans l'image source ;
une commande de mémoire de bloc (308) conçue pour combiner les rangées de pixels en blocs de pixels, chaque bloc de pixels comprenant des pixels horizontaux et verticaux voisins issus de l'image source, dans lequel chaque bloc de pixels est stocké dans des positions de mémoire séquentielle dans une mémoire, et chaque coordonnée déformée possédant une adresse de rangée, de colonne et de module correspondant dans la mémoire ;
un générateur de coordonnées de sortie (316) conçu pour générer des coordonnées de sortie OX,OY correspondant à des positions de pixels de sortie sur un dispositif d'affichage ;
un convertisseur de requête de bloc (918) conçu pour identifier les positions de mémoire au niveau desquelles des blocs de pixels contenant des pixels possédant des coordonnées déformées sont stockés ;
un générateur de requête de bloc conçu pour requérir les blocs de pixels identifiés ;
un contrôleur de mémoire conçu pour extraire de la mémoire les blocs de pixels requis ;
un contrôleur d'affichage conçu pour délivrer la valeur des pixels ayant les coordonnées déformées WX, WY pour affichage au niveau des positions de pixels de sortie correspondantes OX,OY ; et
une mémoire cache de requête de bloc (920) pour enregistrer les adresses des blocs de pixels récemment extraits.

2. Dispositif selon la revendication 1, dans lequel la mémoire comprend une mémoire SDRAM (312), dans lequel chaque bloc de pixels est stocké à travers des colonnes séquentielles dans la mémoire SDRAM et dans lequel le convertisseur de requête de bloc est conçu pour identifier les adresses de rangée, de colonne et de module au niveau desquelles les blocs de pixels requis sont stockés.

3. Dispositif selon la revendication 2, dans lequel des blocs de pixels voisins de l'image source sont regroupés ensemble en un bloc de pixels plus grand et chaque bloc de pixels plus grand est stocké dans la même rangée de la mémoire SDRAM.

4. Appareil selon l'une quelconque des revendications précédentes comportant, de plus, un moteur de générateur de décalage vertical conçu pour :

recevoir une coordonnée de sortie OX,OY généré par le générateur de coordonnées de sortie et générer une pluralité de coordonnées de sortie décalées OX,OY+1, OX, OY+2 ..., chaque coordonnée de sortie décalée étant décalée verticalement à partir de la coordonnée de sortie non décalée OX, OY ; et
fournir les coordonnées de sortie OX,OY, OX,OY+1, OX,OY+2 .... au moteur de déformation.

5. Appareil selon l'une quelconque des revendications précédentes comprenant, de plus :

un dispositif de registre à décalage (324) conçu pour stocker une pluralité d'entrées de coordonnées déformées WX, WY, chaque entrée de coordonnée déformée ayant un champ correspondant à sa valeur de donnée respective D ; et
un échantillonneur (322) conçu pour comparer les coordonnées déformées dans le dispositif de registre à décalage avec les coordonnées déformées des pixels dans l'un quelconque des blocs de pixels extraits et, en cas de comparaison positive, compléter le champ correspondant à la valeur D des données de pixel déformées en coïncidence.

6. Appareil selon l'une quelconque des revendications précédentes comprenant, de plus :

un générateur d'ID (Identifiant) (1112) conçu pour recevoir des positions de mémoire identifiées à partir du convertisseur de requête de bloc (1806) et générer des ID de bloc de pixels internes depuis les positions de mémoire identifiées ;
une ligne à retard d'ID (1810) conçue pour recevoir et retarder les ID de bloc de pixels provenant du générateur d'ID ; et
un moteur de consultation (1808) conçu pour recevoir les ID de bloc de pixels à partir de la ligne à retard et extraire les blocs de pixels présentant des ID de bloc de pixels en coïncidence à partir d'une mémoire cache.

7. Appareil selon la revendication 6 comprenant, de plus, une liste d'ID conçue pour stocker une liste d'ID de blocs de pixels qui ne sont pas en cours d'utilisation, un pointeur de lecture conçu pour désigner la prochaine valeur d'ID de bloc disponible qui peut être utilisée et un pointeur d'écriture conçu pour désigner un ID de blocs recyclé.

8. Appareil selon la revendication 6 ou 7 comprenant, de plus, un comparateur d'ID de bloc (2304) conçu pour recevoir des positions de mémoire identifiées à partir du convertisseur de requête de bloc, les comparer avec des positions de mémoire de blocs identifiés récemment et, si une coïncidence est trouvée, réutiliser l'ID de bloc du bloc de pixels présentant la position de mémoire en coïncidence et, si aucune coïncidence n'est trouvée, utiliser un nouvel ID de bloc pour le bloc de pixels identifié.

9. Appareil selon l'une quelconque des revendications précédentes comprenant, de plus, une mémoire cache de requête de bloc (320) conçue pour stocker des requêtes récentes d'extraction de bloc de pixels, de sorte que le contrôleur de mémoire (310) soit organisé pour ne pas extraire un bloc de pixels requis s'il vient juste d'être requis ou extrait de la mémoire.

10. Appareil selon l'une quelconque des revendications précédentes dans lequel le contrôleur de mémoire (310) est conçu pour stocker dans une mémoire cache les blocs de pixels extraits.

11. Appareil selon la revendication 10, dans lequel le contrôleur de mémoire (310) est conçu pour stocker des pixels voisins dans les blocs de pixels dans différentes zones de la mémoire cache.

12. Appareil selon la revendication 10 ou 11, dans lequel la mémoire cache comporte une mémoire adressable par son contenu.

13. Appareil selon l'une quelconque des revendications précédentes, dans lequel le générateur de coordonnées de sortie comprend un générateur d'impulsion de synchronisation (314) conçu pour générer les coordonnées de sortie à une fréquence de pixel de sortie.

**14.** Appareil selon l'une quelconque des revendications précédentes, comportant :

un interpolateur (928) conçu pour exécuter une interpolation bilinéaire lorsque le moteur de déformation représente les coordonnées de sortie OX,OY en coordonnées déformées non entières WX,WY , et dans lequel :

le convertisseur de requête de bloc est conçu pour identifier les coordonnées déformées WX, WY des pixels dans l'image source qui contribuent à la coordonnée de pixel déformée non entière WX,WY et identifier les positions de mémoire dans lesquelles les blocs de pixels contenant les pixels participants sont stockés ;

le générateur de requête de bloc est conçu pour requérir les blocs de pixels identifiés ;

le contrôleur de mémoire est conçu pour extraire de la mémoire les blocs de pixels requis ;

1'interpolateur est conçu pour déterminer une valeur de sortie interpolée du pixel de sortie OX,OY correspondant à la coordonnée déformée non entière WX,WY ; et

le contrôleur d'affichage est conçu pour délivrer la valeur interpolée pour affichage à la position de pixel de sortie correspondante OX,OY.

**15.** Procédé permettant d'afficher une version déformée d'une image source, le procédé comportant le fait de :

diviser l'image source en une pluralité de rangées de pixels provenant de l'image source ;

combiner les rangées de pixels en blocs de pixels, chaque bloc de pixels comportant des pixels horizontaux et verticaux voisins provenant de l'image source, et stocker dans une mémoire chaque bloc de pixel dans des positions de mémoire séquentielle ;

attribuer des positions fixes dans la mémoire séquentielle à des coordonnées de l'image source ;

générer des coordonnées de sortie OX,OY correspondant à des positions de pixels de sortie sur un affichage ;

configurer les coordonnées de sortie OX,OY en coordonnées déformées WX,WY, les coordonnées déformées correspondant aux positions de pixels dans l'image source ;

identifier les positions de mémoire dans lesquelles des blocs de pixels, contenant les pixels ayant les coordonnées déformées WX,WY, sont stockés ;

requérir les blocs de pixels identifiés ;

récupérer de la mémoire les blocs de pixels requis ; et

délivrer la valeur des pixels ayant les coordonnées déformées WX,WY en vue d'un affichage au niveau des positions de pixels de sortie correspondantes OX,OY ;

enregistrer les positions de mémoire des blocs récemment requis dans une mémoire cache de blocs.

**16.** Programme informatique comprenant des instructions qui, lorsqu'elles sont exécutées, entraînent un appareil de traitement de données à exécuter un procédé selon l'une quelconque des revendications précédentes.

**17.** Support exécutable par ordinateur comportant un programme informatique selon la revendication 16 ou un signal porteur d'un programme informatique selon la revendication 16.

Fig. 1

Fig. 2

Fig. 3

Horizontal Scanning

Vertical
Scanning

Fig. 4

$$\begin{bmatrix} a_{00} & a_{01} & a_{02} & a_{03} \\ a_{10} & a_{11} & a_{12} & a_{13} \\ a_{20} & a_{21} & a_{22} & a_{23} \\ a_{30} & a_{31} & a_{32} & a_{33} \end{bmatrix}$$

Fig. 5

$$[a_{00} \quad a_{01} \quad a_{02} \quad a_{03}]$$

$$[a_{10} \quad a_{11} \quad a_{12} \quad a_{13}]$$

$$[a_{20} \quad a_{21} \quad a_{22} \quad a_{23}]$$

$$[a_{30} \quad a_{31} \quad a_{32} \quad a_{33}]$$

Fig. 6

$$\begin{bmatrix} a_{00} & a_{01} \\ a_{10} & a_{11} \end{bmatrix} \begin{bmatrix} a_{02} & a_{03} \\ a_{12} & a_{13} \end{bmatrix}$$

$$\begin{bmatrix} a_{20} & a_{21} \\ a_{30} & a_{31} \end{bmatrix} \begin{bmatrix} a_{22} & a_{23} \\ a_{32} & a_{33} \end{bmatrix}$$

Fig. 7

$$\begin{bmatrix} a_{30} & a_{20} & a_{10} & a_{00} \\ a_{31} & a_{21} & a_{11} & a_{01} \\ a_{32} & a_{22} & a_{12} & a_{02} \\ a_{33} & a_{23} & a_{13} & a_{03} \end{bmatrix}$$

Fig. 8

Fig. 9

Fig. 10

Fig. 11

Fig. 12

Horizontal Scanning

Vertical
Scanning

## Fig. 13

Horizontal Scanning

Vertical
Scanning

## Fig. 14

Bank, Row,
Column,
Offset And
Fraction

Fig. 15

Fig. 16

Fig. 17

EP 2 446 413 B1

```
┌──────────┐   ┌──────────┐   ┌──────────┐          1808
│ Generate │   │ Generate │   │Convert To│         ╱
│ (OX,OY)  │──▶│ (WX,WY)  │──▶│Block BRC │──┐
│  Output  │   │  Warped  │   │          │  │
└──────────┘   └──────────┘   └──────────┘  │
     1802          1804           1806       │
```

**Generate (OX,OY) Output** — 1802

**Generate (WX,WY) Warped** — 1804

**Convert To Block BRC** — 1806

1808

**Compare Current BRC With Previous BRC & From Previous Line**

**Was Delayed Block Used?**

Same / Different / No

**Reuse Same ID**

**Get New ID & Request SDRAM Data**

**Recycle Old ID**

Data Request: ID & BRC

1800

**Part Of SDRAM Controller** — 1812

**Convert Delayed (WX,WY) To Block BRC**

1810

ID & (WX, WY)

**Delay By One Line**

ID & (WX, WY)

Data From SDRAM: ID And Pixels

**Retrieve From Cache**

ID

**Pixel Block Cache** — 1814

ID

**Store In Cache**

Data

Data

**Final Pixel Value**

FIG. 18

**FIG. 19**

Line 1

Line 2

Line 3

Line 4

**FIG. 20**

**FIG. 21**

**FIG. 22**

```
┌─────────────┐    ┌─────────────┐
│  Generate   │    │  Generate   │
│  (OX,OY)    │───▶│  (WX,WY)    │
│   Output    │    │   Warped    │
└─────────────┘    └─────────────┘
```

2304

```
                          ┌──────────────┐
        2302              │   Compare    │
   ┌─────────────┐        │ Current 4x BRC│
   │ Convert To  │        │ With Previous 4x│
   │  4x Block   │───────▶│  BRC & From   │
   │    BRC      │        │ Previous Line │
   └─────────────┘        └──────────────┘
```

2300

```
┌─────────────┐    ┌─────────────┐
│  Generate 4x │    │ Convert To  │
│   (X,Y) For │───▶│  4x Block   │
│Interpolation│    │    BRC      │
└─────────────┘    └─────────────┘

┌─────────────┐    ┌─────────────┐
│   Convert   │    │ Convert To  │
│   Delayed   │    │  4x Block   │
│  (WX,WY)    │───▶│    BRC      │
│  To Block   │    └─────────────┘
│    BRC      │
└─────────────┘

     Same ──▶  ┌──────────────┐
              │   Reuse      │
              │  Same ID     │
              └──────────────┘

  Different ──▶ ┌──────────────┐
              │  Get New ID   │
              │  & Request    │
              │   SDRAM       │
              │    Data       │
              └──────────────┘

┌──────────────┐          ┌──────────────┐
│ Was Delayed  │   No ──▶ │   Recycle    │
│ Block Used?  │          │   Old ID     │
└──────────────┘          └──────────────┘
```

Data Request: 4x ID & 4x BRC

```
                    ┌──────────────┐
                    │   Part Of    │
                    │    SDRAM     │
                    │  Controller  │
                    └──────────────┘
```

4x ID & (WX, WY)

2306

```
                    ┌──────────────────┐
                    │ Delay By One Line │
                    └──────────────────┘
```

4x ID & (WX, WY)

Data From SDRAM: ID And Pixels

4x ID

```
┌─────────────┐
│  Retrieve   │
│    From     │
│   Cache     │
└─────────────┘
```

ID

```
┌──────┬──────┬──────┬──────┐        ┌──────────┐
│Pixel │Pixel │Pixel │Pixel │        │ Store In │
│Block │Block │Block │Block │◀───────│  Cache   │
│Cache │Cache │Cache │Cache │        └──────────┘
│  0   │  1   │  2   │  3   │
└──────┴──────┴──────┴──────┘
```

Data

2308

```
┌─────────────┐
│  Bi-linear  │  4 x Data
│ Interpolate │◀───────
└─────────────┘
```

Final Pixel
Value

## FIG. 23

## REFERENCES CITED IN THE DESCRIPTION

### Patent documents cited in the description

- US 20020048410 A1